# EUROPEAN PATENT SPECIFICATION

(11) **EP 4 525 074 B1**
(45) Date of publication and mention of the grant of the patent: **02.12.2026**
(21) Application number: 25150400.7
(22) Date of filing: 07.01.2025
(51) Int. Cl.: H01M 4/134, H01M 4/1395, H01M 4/36, H01M 4/38, H01M 4/587, H01M 4/62, H01M 10/052, H01M 4/02

(54) **ANODE MATERIAL AND BATTERY**
ANODENMATERIAL UND BATTERIE
MATÉRIAU D'ANODE ET BATTERIE

(30) Priority: 08.01.2024 CN 202410020730; 19.04.2024 CN 202410494131
(43) Date of publication of application: 19.03.2025
(73) Proprietor: BTR New Material Group Co., Ltd., Shenzhen, Guangdong 518106 (CN)
(72) Inventor: XIAO, Chengmao, Shenzhen, 518106 (CN); HE, Peng, Shenzhen, 518106 (CN); REN, Jianguo, Shenzhen, 518106 (CN); HE, Xueqin, Shenzhen, 518106 (CN)
(74) Representative: Studio Torta S.p.A.

(56) References cited:
- US-A1- 2023 223 537
- US-A1- 2023 411 606
- US-B2- 11 688 854

## Description

### Technical Field

The present disclosure belongs to the technical field of anode materials, and specifically, particularly relates to anode material and battery.

### Background

In recent years, with the development of the market, the integration of power devices, and the functionality keeps getting stronger, the demand for energy supply has been continuously increasing. Lithium-ion batteries are not only widely used in mobile devices such as smartphones and portable computers but also applied in electric vehicles and power tools. The development of lithium-ion batteries with higher energy density is a current trend. The positive and anode materials are the core of the battery and determine the battery's work efficiency. Currently, the commercialized anode material is graphite, whose capacity is close to the theoretical limit, and the scope for further improvement is limited. There is an urgent need to develop a new generation of anode materials with higher energy density.

Silicon anodes are widely regarded as the next generation of battery anode materials, offering advantages such as high capacity, abundant sources, and relative safety. However, silicon anodes experience significant volume expansion during the cycling process, leading to material pulverization and fragmentation, which results in rapid cycle degradation of the material. To address this issue, there are multiple solutions currently being explored, including structural design of silicon, the use of nanotechnology, and porous techniques; composite coating methods to improve performance; and the modification of new electrolytes, binders, and other materials to enhance the silicon electrode.

However, the existing solutions still have many shortcomings in addressing the performance of silicon, and there is significant room for improvement in the long-cycle performance of silicon anode materials.

US 2023/0411606 A1 provides an anode active material for a lithium secondary and a lithium second battery including the same. The anode active material includes a plurality of carbon-based particles containing one or more pores therein, and a silicon-containing coating formed inside the pores and/or on a surface of each of the carbon-based particles, A relative standard deviation of D/G peak intensity ratios of a Raman spectrum measured for 50 different carbon-based particles among the plurality of carbon-based particles is 10% or less.

US 2023/0223537 A1 relates to composite particles containing silicon and carbon, wherein a domain size region of vacancies of 2 nm or less is 44% by volume or more and 70% by volume or less when volume distribution information of domain sizes obtained by fitting a small-angle X-ray scattering spectrum of the composite particles with a spherical model in a carbon-vacancy binary system is accumulated in ascending order, and a true density calculated by dry density measurement by a constant volume expansion method using helium gas is 1.80 g/cm³ more and 2.20 g/cm³ less.

US 11, 688, 854 B2 provides an anode active material for a lithium secondary battery and a lithium secondary battery. The anode active material includes a carbon-based particle including pores formed in at least one of an inside of the particle and a surface of the particle and having a pore size of the carbon-based particle is 20 nm or less, and silicon formed at an inside of the pores of the carbon-based particle or on the surface of the carbon-based particle. A peak intensity ratio in a Raman spectrum of silicon defined as I(515)/I(480) is 1.2 or less. Difference between volume expansion ratios of carbon and silicon can be reduced to improve life-span property of the secondary battery.

### SUMMARY

The present disclosure provides anode material and battery, the capacity, expansion performance and cycle performance of the anode material can be improved.

In a first aspect, the present disclosure provides anode material, including a carbon matrix and silicon material, wherein the silicon material is dispersed in the carbon matrix;

Testing the anode material with Raman spectroscopy, wherein the anode material has a first characteristic peak at 520±10 cm⁻¹, and the peak intensity of the first characteristic peak is IA; there is a second characteristic peak at 960±10 cm⁻¹, the peak intensity of said second characteristic peak being IB; there is a third characteristic peak at 480±10 cm⁻¹, the peak intensity of said third characteristic peak being IC, and the following relationships exist between IA, IB and IC: 0.3 ≤ IA/(IB+IC) ≤ 0.6; and the anode material satisfies: α≤10%;

Wherein the α is obtained by the following test method:
In an electron microscope image shown by SEM section processing of a single anode material particle, a 10µm×10µm square region is selected, a sectional area of the anode material particles in the square region is recorded as S, a sum of sectional areas of all pores with a pore diameter of greater than 50 nm in the region of the section of the anode material particles in the square region is recorded as S₁, α' = S₁/S, and the α is an arithmetic mean value of α' values of at least 10 anode material particles.

In some embodiments, the silicon material comprises silicon particles.

In some embodiments, the anode material has pores, wherein a volume proportion of mesopores in a total pore volume of the anode material is 25%-95%; and/or, a total pore volume of the anode material is 0.001 cm³/g-0.1 cm³/g.

In some embodiments, an anode material with silicon particles removed has pores, and a total pore volume of the anode material with silicon particles removed is 0.4 cm³/g-1.5 cm³/g; and/or, the average pore size of the pores of the anode material with silicon particles removed is 1.0 nm-5.2 nm.

In some embodiments, at least a part of a surface of the anode material has a carbon layer, testing the surface of the anode material with Raman spectroscopy, in which the anode material has a characteristic peak D at 1350±10 cm⁻¹, the peak intensity of said characteristic peak D is ID, having a characteristic peak G at 1580±10 cm⁻¹, the peak intensity of said characteristic peak G being IG, then there is the following relationship between IA, ID, IG: (ID+IG)/IA ≥ 10.

In some embodiments, at least part of the silicon particles are located inside the particles of the carbon matrix.

In some embodiments, the carbon matrix comprises at least one of hard carbon and soft carbon.

In some embodiments, the carbon matrix comprises porous carbon, the porous carbon comprises at least one of activated carbon, an activated carbon fiber, carbon black, capacitive carbon, mesoporous carbon, a carbon nanotube, and a carbon molecular sieve.

In some embodiments, a mass proportion of oxygen element in the anode material is ≤ 5%.

In some embodiments, a mass proportion of carbon element in the anode material is 30wt%-60wt%.

In some embodiments, a mass proportion of silicon element in the anode material is 30wt%-65wt%.

In some embodiments, at least a partial surface of the anode material is provided with a carbon layer, and the thickness of the carbon layer is 0.1 nm-3000 nm.

In some embodiments, the anode material further comprises other active particles, and the other active particles comprise at least one of Li, Na, K, Sn, Ge, Fe, Mg, Ti, Zn, Al, P and Cu.

In some embodiments, the silicon particles comprise at least one of amorphous silicon, crystalline silicon, silicon oxide, silicon alloy, and composite of crystalline silicon and amorphous silicon.

In some embodiments, the silicon particles comprise amorphous silicon.

In some embodiments, the silicon particles have an average particle diameter of 1 nm-100 nm.

In some embodiments, the specific surface area of the anode material is 1 m²/g-500 m²/g, the specific surface area of the anode material with silicon particles removed is 800 m²/g-2500 m²/g.

In some embodiments, a compaction density of the anode sheet made of the anode material is 1.3 g/cm³-1.9 g/cm³, and/or a withstand voltage critical pressure P of the anode sheet made of the anode material is greater than or equal to 100 MPa.

In a second aspect, the present disclosure provides a battery, the battery includes the anode material of the first aspect.

Technical solutions of the present disclosure at least have the following beneficial effects.

According to the anode material provided in the present disclosure, silicon particles are compounded with a carbon matrix, so that the volume expansion of the silicon particles can be alleviated by the carbon matrix, and the situation of excessive local expansion stress of the anode material can be reduced. The first characteristic peak of the anode material can be used for characterizing a resonance vibration peak between Si-Si atoms (i.e. non-oxidized Si), and the peak strength and shape thereof can reflect the crystal structure and impurity content of silicon particles. When the first characteristic peak is deviated, the stress distribution of a Si single crystal surface can be reflected. The second characteristic peak is used for characterizing the Si-O-Si vibration peak, and represents the structure and quality of silicon oxide; and the third characteristic peak is used for characterizing the Si-O vibration peak, and represents the thickness and quality of an oxide layer on the surface of silicon particles. Controlling 0.3 ≤ IA/(IB+IC) ≤ 0.6, so that the oxidation degree of silicon particles in the anode material can be controlled within a reasonable range; an appropriate amount of oxide on the surface of the silicon particles can reduce the side reaction generated by the silicon particles in contact with the electrolyte, and can also reduce the existence of excessive oxide, so as to reduce the specific capacity and the first Coulombic efficiency of the anode material; furthermore, an appropriate amount of oxides on the surface of the silicon particles can also serve as passivation, and in the subsequent pulping process of the electrode sheet, a side reaction between the exposed Si in the anode material and the aqueous solution is reduced, thereby reducing the gas generation problem in the pulping process of the electrode sheet. In the present disclosure, the ratio α of the area of macropores in the cross section of the anode material particle is controlled, i.e. the anode material particle has few macropores therein, which can reduce cracks of the anode material during circulation, reduce the risk of direct contact between silicon particles and electrolytic solution, and reduce side reactions. In the present disclosure, IA/(IB+IC) of an anode material is controlled at the same time to reduce the contact between silicon particles in the anode material and electrolytic solution. The two cooperate to further reduce the direct contact between the silicon particles in the anode material and the electrolytic solution. The surface of the anode material is provided with a stable solid electrolyte membrane, thereby improving the specific capacity of the anode material and improving the cycle stability of the anode material.

### Brief Description of the Drawings

The present disclosure is further described below in conjunction with accompanying drawings and embodiments.
Fig. 1 is a preparation flow chart of an anode material of the present disclosure;
Fig. 2a is an SEM image of an anode material prepared in Embodiment 1 of the present disclosure;
Fig. 2b is a sectional SEM image of an anode material prepared in Embodiment 1 of the present disclosure;
Fig. 3 is an XRD diagram of an anode material prepared in Embodiment 1 of the present disclosure;
Fig. 4 shows first charge-discharge curves of the anode material prepared in Embodiment 1 of the present disclosure;
Fig. 5 shows a cycle performance curve of the anode material prepared in Embodiment 1 of the present disclosure.

### Detailed Description of the Embodiments

In order to make the technical solutions of the present disclosure better understood, the embodiments of the present disclosure are described in detail below in conjunction with the accompanying drawings.

It should be clear that the embodiments described are merely a part of the embodiments of the present disclosure, rather than all of the embodiments. Based on the embodiments of the present disclosure, all other embodiments obtained by persons of ordinary skill in the art without exerting creative effort fall within the scope of protection of the present disclosure.

Terms used in the embodiments of the present disclosure are only for the purpose of describing specific embodiments and are not intended to limit the present disclosure. The terms "a", "said" and "the" in a singular form used in the embodiments and attached claims of the present disclosure are also intended to include a plural form, unless other meanings are clearly indicated herein.

It should be understood that the term "and/or" used herein merely shows an association relationship describing associated objects, indicating that three kinds of relationships may be expressed. For example, A and/or B may be expressed in three situations, including separate presence of A, simultaneous presence of A and B, and separate presence of B. In addition, the character "/" herein generally means that former and latter associated objects have an "or" relationship.

Terms:
"Micropore" is used herein to refer to pores having a diameter of less than 2 nm.
"Mesopore" is used herein to refer to a pore having a diameter between 2 nm and 50 nm.
"Macropore" is used to refer to pores greater than 50 nm in diameter.

The anode material provided in the embodiments of the present disclosure comprises a carbon matrix and silicon material, the silicon material is dispersed in the carbon matrix.

Testing the anode material with Raman spectroscopy, wherein the anode material has a first characteristic peak at 520±10 cm⁻¹, and the peak intensity of the first characteristic peak is IA; there is a second characteristic peak at 960±10 cm⁻¹, the peak intensity of said second characteristic peak being IB; there is a third characteristic peak at 480±10 cm⁻¹, the peak intensity of said third characteristic peak being IC, and the following relationships exist between IA, IB and IC: 0.3 ≤ IA/(IB+IC) ≤ 0.6; and the anode material satisfies: α≤10%;

Wherein the α is obtained by the following test method:
In an electron microscope image shown by SEM section processing of a single anode material particle, a 10µm×10µm square region is selected, a sectional area of the anode material particles in the square region is recorded as S, a sum of sectional areas of all pores with a pore diameter of greater than 50 nm in the region of the section of the anode material particles in the square region is recorded as S₁, α' = S₁/S, and the α is an arithmetic mean value of α' values of at least 10 anode material particles.

According to the anode material provided in the present disclosure, silicon material are compounded with a carbon matrix, so that the volume expansion of the silicon material can be alleviated by the carbon matrix, and the situation of excessive local expansion stress of the anode material can be reduced. The first characteristic peak of the anode material can be used for characterizing a resonance vibration peak between Si-Si atoms (i.e. non-oxidized Si), and the peak strength and shape thereof can reflect the crystal structure and impurity content of silicon material. When the first characteristic peak is deviated, the stress distribution of a Si single crystal surface can be reflected. The second characteristic peak is used for characterizing the Si-O-Si vibration peak, and represents the structure and quality of silicon oxide; and the third characteristic peak is used for characterizing the Si-O vibration peak, and represents the thickness and quality of an oxide layer on the surface of silicon material. Controlling 0.3 ≤ IA/(IB+IC) ≤ 0.6, so that the oxidation degree of silicon material in the anode material can be controlled within a reasonable range; an appropriate amount of oxide on the surface of the silicon material can reduce the side reaction generated by the silicon material in contact with the electrolyte, and can also reduce the existence of excessive oxide, so as to reduce the specific capacity and the first Coulombic efficiency of the anode material; furthermore, an appropriate amount of oxides on the surface of the silicon material can also serve as passivation, and in the subsequent pulping process of the electrode sheet, a side reaction between the exposed Si in the anode material and the aqueous solution is reduced, thereby reducing the gas generation problem in the pulping process of the electrode sheet. In the present disclosure, the ratio α of the area of macropores in the cross section of the anode material particle is controlled, i.e. the anode material particle has few macropores therein, which can reduce cracks of the anode material during circulation, reduce the risk of direct contact between silicon material and electrolytic solution, and reduce side reactions. In the present disclosure, IA/(IB+IC) of an anode material is controlled at the same time to reduce the contact between silicon material in the anode material and electrolytic solution. The two cooperate to further reduce the direct contact between the silicon material in the anode material and the electrolytic solution. The surface of the anode material is provided with a stable solid electrolyte membrane, thereby improving the specific capacity of the anode material and improving the cycle stability of the anode material.

It can be understood that there are usually some large pores with a relatively large diameter (> 50 nm) in the anode material more or less. On the one hand, the macropores are preferentially spread points of cracks during the cycling process of a battery prepared from the anode material. On the other hand, more silicon material deposited in the macropores will generate a larger expansion stress during lithium deintercalation, the accumulated stress tends to grow cracks in the vicinity of the macropores, and the electrolyte tends to enter the interior of the anode material along the cracks extending along the macropores, resulting in degradation of the performance of the anode material. On the other hand, the large pore also influences the compaction performance of the anode material, so that the compaction performance of the anode material is reduced.

In the present disclosure, the ratio α value of the area of the macropores in the cross section of the anode material particles is controlled to be: α≤10%, the α may be 0, 1%, 2%, 3%, 4%, 5%, 6%, 7%, 8%, 9%, or 10%, etc., and certainly may also be other values within the above range, which is not limited herein in the present disclosure. Within the above limited range, it is indicated that when the number of the macropores in the section of the anode material of the present disclosure is smaller or the aperture of the macropores is smaller, convenience is provided for improving the compaction density of the anode material, reducing the specific surface area, improving the structural stability of the anode material, and making the anode material difficult to crack during processing, thereby improving the processing performance and cycle performance of the anode material. When the α is greater than 10%, the aperture of the macropores in the section of the anode material is too large or the number of the macropores is too large, and an electrolyte is easily immersed in anode material particles in a first charge-discharge process, leading to increased side reactions between the anode material and the electrolyte. Moreover, the macropores are used as locations of the stress concentration in the anode material. When the aperture of the macropores is too large or the number of the macropores is too large, the anode material particles easily have the problems of cracking, pulverization and the like in a delithiation/lithium intercalation process, leading to rapid deterioration of the cyclic performance of the anode material. In the present disclosure, the ratio α of the area of macropores in the cross section of the anode material particle is controlled, i.e. the anode material particle has few macropores therein, which can reduce cracks of the anode material during circulation, reduce the risk of direct contact between silicon material and electrolytic solution, and reduce side reactions between the anode material and the electrolytic solution. More preferably, the ratio α value of the area of the macropores in the cross section of the anode material particles is controlled to be: α≤4%.

In some embodiments, the pores in the anode material include micropores and mesopores.

In some embodiments, in the anode material, the proportion by volume of mesopores in the total pore volume of the anode material is 25%-95%, specifically may be 25%, 30%, 35%, 40%, 50%, 60%, 70%, 75%, 80%, 85%, 90%, 92%, or 95%, etc., which is not limited herein in the present disclosure. Preferably, the proportion by volume of mesopores in the total pore volume of the anode material is 80%-95%.

It should be noted that the pores in the anode material are mainly mesopores, and when a battery prepared from the anode material is charged and discharged, the mesopores in the anode material may provide buffer spaces for the expansion of silicon material, and on the other hand, the stress dispersion distribution in the anode material is ensured. When the anode material is applied to a lithium ion battery, the specific capacity of the anode material can be improved, the volume expansion of silicon material can also be reduced, the particle strength of the anode material is improved, and the collapse and crushing of the material structure during the rolling or circulating process of the electrode sheet are reduced, thereby improving the cycle performance, electrochemical performance, etc. of the anode material under the cooperation of the described integral structure.

In some embodiments, the silicon material comprises silicon particles.

In some embodiments, a total pore volume of the anode material is 0.001 cm³/g-0.1 cm³/g. The total pore volume of the anode material may specifically be 0.001cm³/g, 0.002cm³/g, 0.005cm³/g, 0.008cm³/g, 0.01cm³/g, 0.02cm³/g, 0.03cm³/g, 0.04cm³/g, 0.05cm³/g, 0.06cm³/g, 0.07cm³/g, 0.08cm³/g, 0.09cm³/g or 0.1cm³/g etc., and certainly may also be other values within the above range, which is not limited herein in the present disclosure. The total pore volume of the anode material is within the foregoing range, which can not only increase the specific capacity of the anode material, but also ensure that the anode material can reserve an appropriate amount of pores for mitigating volume expansion caused by silicon particles during lithium deintercalation, thereby helping to improve the cycling performance of a battery prepared from the anode material.

In some embodiments, at least a part of a surface of the anode material has a carbon layer, testing the surface of the anode material with Raman spectroscopy, in which the anode material has a characteristic peak D at 1350±10 cm⁻¹, the peak intensity of said characteristic peak D is ID, having a characteristic peak G at 1580±10 cm⁻¹, the peak intensity of said characteristic peak G being IG, then there is the following relationship between IA, ID, IG: (ID+IG)/IA ≥ 10. The (ID+IG)/IA may specifically be 10, 12, 14, 15, 16, 17, 18, 19, 20, 22, 24, 25, 30 or 35 etc., and certainly may also be other values within the above range, which is not limited herein in the present disclosure. It can be understood that, the arrangement of the carbon layer can reduce the occurrence of side reactions when the electrolyte enters the interior of the anode material, thereby improving the initial Coulombic efficiency and capacity of the anode material; on the other hand, the carbon layer can cooperate with the carbon matrix to relieve the volume expansion of silicon particles, reduce the volume expansion of the whole anode material, and reduce the swelling of an electrode sheet prepared from the anode material. I_{A} represents a characteristic peak of Si, and the characteristic peak of C is much stronger than the characteristic peak of Si, i.e. there are almost no exposed Si particles on the particle surface, indicating that the carbon layer on the surface of the anode material is relatively dense and intact, which helps to reduce the direct contact between the electrolyte and the silicon particles and reduce the occurrence of side reactions.

In the present disclosure, a nitric acid solution with a concentration of 1 M is added to a anode material and soaked for 4 h, and then a 20% mass fraction of an HF acid solution is dripped into the anode material dropwise, so as to produce a yellow smoke; the dripped is repeated many times until no yellow smoke is produced in the solution; Finally, the residue is digested with a 1 M nitric acid solution, and then washed and dried to obtain an anode material with silicon particles removed. The anode material from which silicon particles are removed may also be obtained by using other methods, for example, in a stirred state, dropwise dropping 150 mL of a 20% mass fraction HF acid solution into 10 g of an anode material may generate SiF₄ and H₂ gases, and releasing heat until no gas is generated, then centrifuging to remove the supernatant liquid, and again adding 150 mL of a 20% mass fraction HF acid solution to the anode material, after stirring for 12 h, re-centrifuging to remove the supernatant liquid, and then washing the anode material with pure water until neutral and drying same, to obtain an anode material, i. e. a carbon matrix, from which the silicon material is removed.

In some embodiments, the carbon matrix includes at least one of hard carbon and soft carbon. It can be understood that selecting the described materials as carbon-based substances can both achieve the effect of supporting the skeleton, and also have good electrical conductivity, thereby ensuring the electrical conductivity of the anode material.

In some embodiments, the carbon matrix includes porous carbon.

In some embodiments, the porous carbon includes at least one of activated carbon, an activated carbon fiber, carbon black, capacitive carbon, mesoporous carbon, a carbon nanotube, and a carbon molecular sieve.

In some embodiments, an anode material with silicon particles removed has pores.

In some embodiments, the average pore size of the pores of the anode material with silicon particles removed is 1.0 nm-5.2 nm, specifically may be 1.0nm, 1.5nm, 1.8nm, 2.0nm, 2.1nm, 2.2nm, 2.5nm, 2.8nm, 3.0nm, 3.2nm, 3.5nm, 4.0nm, 4.5nm or 5.2nm, etc., which is not limited herein in the present disclosure. An anode material with silicon particles removed, i.e. the carbon matrix. If the pore size of the pores of the carbon matrix is excessively small, a gaseous precursor of silicon particles is unlikely to penetrate into the pores, and is likely to aggregate on the surface of the carbon matrix to form a shell structure, resulting in a decrease in the content of silicon particles inside the anode material, and a decrease in the specific capacity of the anode material. When the pore diameter of the pore of the carbon matrix is too large, although it is beneficial to fill silicon particles, problems such as non-uniform distribution of silicon particles and silicon segregation may be caused, thereby causing uneven expansion of the anode material, excessive local expansion stress, particle fracture, etc., and further causing a decrease in electrochemical performance of the anode material.

In some embodiments, the specific surface area of the anode material with silicon particles removed is 800 m²/g-2500 m²/g, specifically may be 800 m²/g, 1000m²/g, 1200m²/g, 1500m²/g, 1800m²/g, 2000m²/g, 2200m²/g, 2400m²/g or 2500m²/g, etc., and certainly may also be other values within the above range, which is not limited herein in the present disclosure.

In some embodiments, an anode material with silicon particles removed has pores, and a total pore volume of the anode material with silicon particles removed is 0.4 cm³/g-1.5 cm³/g, specifically may be 0.4cm³/g, 0.5cm³/g, 0.6cm³/g, 0.9cm³/g, 1.0cm³/g, 1.2cm³/g, 1.3cm³/g, 1.4cm³/g or 1.5cm³/g, etc., and certainly may also be other values within the above range, which is not limited herein in the present disclosure. In the present disclosure, the total pore volume of the anode material (i.e. the carbon matrix) with silicon particles removed is controlled to be within the described range. The carbon matrix can provide enough space for containing silicon particles, which can not only increase the specific capacity of the anode material, but also ensure that the anode material can reserve an appropriate amount of pores for mitigating volume expansion caused during lithium deintercalation of the silicon particles, and is beneficial to improving the cycling performance of the anode material.

In some embodiments, the silicon particles comprise at least one of amorphous silicon, crystalline silicon, silicon oxide, silicon alloy, and composite of crystalline silicon and amorphous silicon; specifically, the silicon alloy may be a silicon-lithium alloy, a silicon-magnesium alloy, or the like. Definitely, it should be noted that, in some cases, the silicon alloy includes elemental silicon particles and an alloy.

In some embodiments, silicon particles comprise amorphous silicon and/or crystalline silicon. Preferably, the silicon particles comprise amorphous silicon. The amorphous silicon isotropically expands in the lithium intercalation process, which can reduce the collapse of the pore structure, suppress the rapid attenuation of the specific capacity, and improve the lithium intercalation cycle performance of the anode material.

In some embodiments, the anode material further comprises other active particles, and the other active particles comprise at least one of Li, Na, K, Sn, Ge, Fe, Mg, Ti, Zn, Al, P and Cu. Other active particles may be metallic elements.

In some embodiments, the other active particles may specifically be Sn particles, Ge particles, Al particles, and in some other implementations, the other active particles may also be a silicon-lithium alloy, a silicon-magnesium alloy, or the like. It should be noted that, in some cases, the other active particles include elemental particles and alloys.

In some embodiments, at least part of silicon particles are located inside particles of a carbon matrix. The silicon particles are located inside the carbon matrix, and can improve the conductivity of an anode material by means of the carbon matrix, and at the same time, direct contact between the silicon particles and an electrolytic solution is reduced, thereby reducing the occurrence of side reactions.

In some embodiments, the silicon oxide includes a silicon element and an oxygen element, an atomic ratio of the silicon element to the oxygen element is 0-2:1, and does not include 0:1. The atomic ratio of the silicon element to the oxygen element may specifically be 0.05:1, 0.11:1, 0.21:1, 0.26:1, 0.31:1, 0.41:1, 0.51:1, 0.59:1, 0.61:1, 0.69:1, 0.71:1, 0.74:1, 0.76:1, 0.79:1, 0.89:1, 0.99:1, 1:1, 1.1:1, 1.2:1, 1.3:1, 1.4:1, 1.5:1, 1.6:1, 1.7:1, 1.8:1, 1.9:1 or 2:1, etc., which is not limited herein in the present disclosure. Preferably, the atomic ratio of the silicon element to the oxygen element is 0-1:1, and 0:1 is not included.

In some embodiments, the silicon oxide has the general chemical formula SiOₓ, where 0<x<2, x specifically may be 0.05, 0.11, 0.21, 0.26, 0.31, 0.41, 0.51, 0.59, 0.61, 0.69, 0.71, 0.74, 0.76, 0.79, 0.89, 0.99, 1, 1.1, 1.2, 1.3, 1.4, 1.5, 1.6, 1.7, 1.8 or 1.9, etc., which is not limited herein in the present disclosure. Preferably, 0<x<1.

In some embodiments, the silicon particles have an average particle diameter of 0.1 nm to 100 nm, specifically may be 0.1nm, 0.5nm, 1nm, 10nm, 30 nm, 50nm, 60nm, 70nm, 80 nm, 90 nm or 100nm, etc., and certainly may also be other values within the above range, which is not limited herein in the present disclosure. Within the described defined range, the mechanical stress during the expansion of silicon particles decreases with the decrease of the particle size, and after the size decreases, electron and ion transmission paths can be shortened; at the same time, the size of the silicon particles decreases, and the voids between adjacent silicon particles increase, which can reserve space for expansion. It can be understood that, the average particle size of the silicon particles is within the above range, which can ensure the battery capacity of the lithium ion battery and reduce the irreversible capacity loss. Preferably, the average particle size of the silicon particles is 0.1 nm-50 nm, more preferably, the average particle size of the silicon particles is 0.1 nm-5 nm.

In some embodiments, the morphology of the silicon particles comprises at least one of a dot shape, a spherical shape, an ellipsoidal shape and a sheet shape, and the morphology of the silicon particles can be selected according to actual needs, which is not limited herein.

In some embodiments, the purity of the silicon particles is greater than 99%. It can be understood that the high-purity silicon particles are beneficial for alloying with Li-Si of lithium, thereby improving the cycle performance of a lithium ion battery.

In some embodiments, a mass proportion of carbon element in the anode material is 30wt%-60wt%, specifically may be 30wt%, 40wt%, 50wt%, 55wt% or 60wt%, etc., and certainly may also be other values within the above range, which is not limited herein in the present disclosure.

In some embodiments, a mass proportion of silicon element in the anode material is 30wt%-65wt%, specifically may be 30wt%, 35wt%, 40wt%, 45wt%, 50wt%, 55wt%, 60wt% or 65wt%, etc., and certainly may also be other values within the above range, which is not limited herein in the present disclosure. Preferably, the mass proportion of carbon element in the anode material is 35wt%-55wt%.

In some embodiments, the mass ratio of silicon element to carbon element in the anode material is 0.8-2.0:1, specifically may be 0.8:1, 0.9:1, 0.92:1, 0.95:1, 0.98:1, 1.0:1, 1.01:1, 1.02:1, 1.05:1, 1.1:1, 1.2:1, 1.5:1, 1.6:1, 1.8:1, 1.9:1 or 2.0:1, etc., which is not limited herein in the present disclosure. The mass ratio of silicon element to carbon element in the anode material is less than 0.8:1, and the specific capacity of the anode material is reduced, but the overall cycle performance is improved. The mass ratio of silicon element to carbon element in the anode material is ≥ 2.0:1, and the specific capacity of the anode material increases with the increase of the silicon content; however, the volume expansion effect of silicon is obvious, the cycle performance of the anode material is affected, and the capacity ratio also decreases. Controlling within the described range is beneficial to improve the comprehensive specific capacity and cycle stability of the anode material.

In some embodiments, the median particle size of the anode material is less than or equal to 25 µm, for example, may be 1 µm, 5 µm, 8 µm, 10 µm, 12 µm, 15 µm, 18 µm, 20 µm, 22 µm, or 25 µm, etc., and certainly may also be other values within the above range, which is not limited herein in the present disclosure. Controlling the median particle size of the anode material to be within the above range facilitates improving the cycle performance of the anode material.

In some embodiments, the anode material also comprises a coating layer distributed on at least a part of the surface of the carbon matrix. The arrangement of the coating layer, on the one hand, can reduce the occurrence of side reactions when the electrolyte enters the anode material, thereby improving the initial efficiency and capacity of the anode material, and on the other hand, the coating layer can cooperate with the carbon matrix to relieve the volume expansion of the active substance, reduce the volume expansion of the whole anode material, and reduce the swelling of the anode material prepared as an anode sheet.

In some embodiments, the coating layer comprises a carbon layer, and the material of the carbon layer comprises at least one of graphene, soft carbon, hard carbon and a conductive polymer. Specifically, the conductive polymer includes at least one of polyaniline, polyacetylene, polypyrrole, polythiophene, poly-3-hexylthiophene, polyparaphenylene vinylene, polypyridine and polyphenylenevinylene.

In some embodiments, the thickness of the carbon layer is 0.1 nm to 3000 nm, and may specifically be 0.1 nm, 1 nm, 50 nm, 100 nm, 500 nm, 1000 nm, 2000 nm or 3000 nm, etc., and certainly may also be other values within the above range, which is not limited herein in the present disclosure. Preferably, the thickness of the coating layer is 0.5nm-1000nm, more preferably, the thickness of the carbon layer is 5nm-500nm.

In some embodiments, a mass proportion of oxygen element in the anode material is ≤ 5%. Specifically, the mass proportion of the oxygen element in the anode material may be 0wt%, 1wt%, 1.5wt%, 2wt%, 2.5wt%, 3wt%, 3.5wt%, 4wt%, 4.5wt% or 5wt%, etc., which is not limited herein in the present disclosure. It can be appreciated that if the mass content of the oxygen element is too high, the silicon-based material in the anode material may be partially oxidized. Controlling the oxygen element content in the anode material to be within the described range facilitates improving the specific capacity of the anode material and reducing the formation of low activity silicon dioxide.

In some embodiments, the specific surface area of the anode material is 1 m²/g-500 m²/g. Specifically, the specific surface area of the anode material may be 1m²/g, 2m²/g, 4m²/g, 5m²/g, 10m²/g, 50m²/g, 100m²/g, 150m²/g, 200m²/g, 250m²/g, 300m²/g, 350m²/g, 400m²/g, 450m²/g or 500m²/g, etc., and certainly may also be other values within the above range, which is not limited herein in the present disclosure. The specific surface area of the anode material is controlled within the above range, so that volume expansion of the anode material can be suppressed, and the cycle performance of the anode material is improved.

In some embodiments, the compaction density of the anode material was 0.8 g/cm³-1.3 g/cm³, Specifically, the specific surface area of the anode material may be 0.8g/cm³, 0.9 g/cm³, 1.0g/cm³, 1.1 g/cm³, 1.2g/cm³ or 1.3 g/cm³, etc., and certainly may also be other values within the above range, which is not limited herein in the present disclosure.

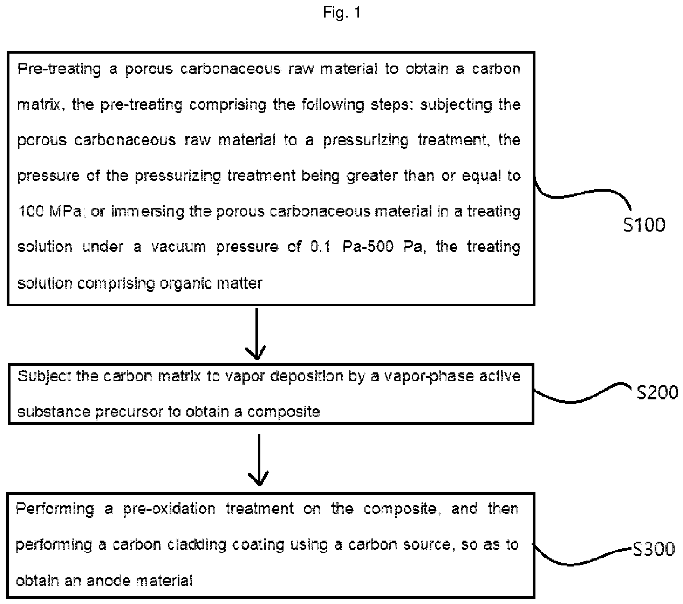

An embodiment of the present disclosure provides a preparation method for an anode material. As shown in Fig. 1, a preparation flow chart of an anode material of the present disclosure includes the following steps:
step S100, subjecting a porous carbonaceous raw material to pretreatment to obtain a carbon matrix, where the pretreatment of the porous carbonaceous raw material includes the following step:
   subjecting the porous carbonaceous raw material to pressurizing treatment, where a pressure of the pressurizing treatment is equal to or greater than 100 MPa;
   or under the condition of a vacuum pressure of 0.1 Pa-500 Pa, impregnating the porous carbonaceous raw material in a treatment solution, where the treatment solution includes an organic compound;
step S200, subjecting the carbon matrix to vapor deposition by a vapor-phase active substance precursor to obtain composite.
step S300, performing a pre-oxidation treatment on the composite, and then performing a carbon cladding treatment using a carbon source, so as to obtain an anode material.

In the above solution, the porous carbonaceous raw material is subjected to the pretreatment to obtain the carbon matrix in the present disclosure. The pretreatment may be pressurization treatment, or impregnation treatment of the porous carbonaceous material with a treatment solution. By the pressurizing treatment, the pores with a larger aperture in the porous carbonaceous raw material preferentially produce cracks or are directly crushed, micropores and mesopores with a smaller aperture are retained in a pressurizing treatment process, such that the number of macropores in the carbon matrix is reduced. The porous carbonaceous raw material is subjected to the impregnating with the treatment solution, and the treatment solution includes an organic compound. In an impregnating process, due to the effect of a capillary tube, molecules of the treatment solution are difficult to enter the micropores and are mainly filled in the mesopores and macropores of the porous carbonaceous raw material, and the organic compound can be preferentially filled in the macropores of the porous carbonaceous raw material to make the macropores converted into the macropores, mesopores or micropores with a smaller aperture, such that convenience is provided for increasing the number of the micropores and mesopores in the carbon matrix, meanwhile the number and volume proportion of the macropores of the carbon material are reduced, and the porosity of the carbon matrix is reduced. Then, the carbon matrix is subjected to the vapor deposition by the vapor-phase active substance precursor. On the one hand, as the number and volume proportion of the macropores are smaller, the vapor-phase active substance precursor has good deposition uniformity in the porous carbon matrix, an active material generated by the vapor-phase active material precursor is deposited in the porous carbon matrix and is difficult to agglomerate, and the volume expansion of the anode material can be reduced. On the other hand, as the active material generated by the vapor-phase active material precursor is filled in the carbon matrix, the number and volume proportion of the macropores in the anode material are further reduced, and the area proportion α of the pores with an aperture greater than 50 nm in the section of the anode material is equal to or less than 10%, such that convenience is provided for improving the tap density of the anode material, correspondingly improving the compaction performance of the anode material, reducing the problems of crushing, cracks and the like of the anode material in a rolling process. Finally, performing a pre-oxidation treatment on the compound, so that an appropriate amount of silicon oxide is formed on the surface of the silicon particles in the compound, and the appropriate amount of the oxide on the surface of the silicon particles can reduce side reactions generated when the silicon particles are in contact with the electrolyte, and can also reduce the existence of excessive oxide, so as to reduce the specific capacity of the anode material and the first Coulombic efficiency. Furthermore, an appropriate amount of oxides on the surface of the silicon particles can also serve the purpose of passivation, and in the subsequent pulping process of the electrode sheet, a side reaction between the exposed Si in the anode material and the aqueous solution is reduced, and the gas generation problem in the pulping process of the electrode sheet is reduced; Then, the carbon coating treatment further reduces direct contact between the silicon particles in the anode material and the electrolytic solution, and the prepared anode material can have a high capacity, a high initial efficiency, a high cycle performance and a good processability at the same time.

The preparation method of the present disclosure is specifically introduced in combination with embodiments below.

In step S100, a porous carbonaceous raw material is subjected to pretreatment to obtain a carbon matrix.

In some embodiments, the step S100 includes: subjecting the porous carbonaceous raw material to pressurizing treatment to obtain a carbon matrix, and a pressure of the pressurizing treatment is equal to or greater than 100 MPa.

In some embodiments, the pressure of the pressurizing treatment is equal to or greater than 100 MPa, specifically may be 100 MPa, 150 MPa, 200 MPa, 250 MPa, 300 MPa, 350 MPa, 400 MPa, 500 MPa, or 650 MPa, etc., and certainly may also be other values within the above range, which is not limited herein in the present disclosure. In the present disclosure, the pressure of the pressurizing treatment is relatively large. By subjecting the porous carbonaceous raw material to the pressurizing treatment, the porous carbonaceous raw material will preferentially produce cracks at the macropores and then are cracked, such that the number of the macropores in the porous carbonaceous raw material is reduced. Preferably, the pressure of the pressurizing treatment is equal to or greater than 150 MPa. When the pressure of the pressurizing treatment is less than 100 MPa, it cannot be ensured that cracks are produced at the macropores in the porous carbonaceous raw material, leading to a larger number of the macropores in the porous carbonaceous raw material, which is not conducive to improving the compaction density of the anode material.

In some embodiments, a time of the pressurizing treatment is 0.5 h-10 h, specifically may be 0.5 h, 1 h, 2 h, 3 h, 4 h, 5 h, 6 h, 7 h, 8 h, 9 h, or 10 h, etc., and certainly may also be other values within the above range, which is not limited herein in the present disclosure.

In some embodiments, a device of the pressurizing treatment includes at least one of a cold-rolling mill and a molding press.

In some embodiments, after the pressurizing treatment, the method further includes the steps of crushing and screening a material obtained by the pressurizing treatment. In a crushing process, a part of the porous carbonaceous raw material is easily cracked at the macropores with cracks, thereby further reducing the number of the macropores in the carbon matrix.

In some embodiments, a mesh number of the screening is 10 mesh-500 mesh, specifically may be 10 mesh, 50 mesh, 100 mesh, 200 mesh, 300 mesh, 400 mesh, or 500 mesh, etc., and certainly may also be other values within the above range, which is not limited herein in the present disclosure.

In some embodiments, the step S100 includes: under the condition of a vacuum pressure of 0.1-500 Pa, impregnating the porous carbonaceous raw material in a treatment solution to obtain a carbon matrix, and the treatment solution includes an organic compound with a molecular weight greater than 10,000.

In some embodiments, the vacuum pressure is 0.1 Pa-500 Pa, specifically may be 0.1 Pa, 1 Pa, 10 Pa, 50 Pa, 100 Pa, 200 Pa, 300 Pa, 400 Pa, or 500 Pa, etc., and certainly may also be other values within the above range, which is not limited herein in the present disclosure. Within the above range, the surface pressure of the porous carbonaceous raw material is lower than the pressure of the treatment solution, and the treatment solution can be immersed into the porous carbonaceous raw material, such that the treatment solution can enter the interior of the porous carbonaceous raw material through the pores or defects of the porous carbonaceous raw material to achieve the purpose of filling the macropores in the porous carbonaceous raw material, the number or aperture of the macropores is reduced, and the compaction density of the anode material is improved. When the vacuum pressure is greater than 500 Pa, some of the mesopores and micropores easily produce cracks, such that the porosity of the anode material is too low, and deposition of the silicon particles is not facilitated. When the vacuum pressure is less than 0.1 Pa, it cannot ensure that the processing solution penetrates into the porous carbonaceous material, leading to a larger number of the macropores in the porous carbonaceous raw material.

If the vacuum pressure is less than 0.1 Pa, it cannot ensure that the processing solution penetrates into the porous carbonaceous material, resulting in a large number of macropores in the porous carbonaceous material.

In some embodiments, the treatment solution includes a solute and a solvent, the solute includes at least one of a polysaccharide, a protein, nucleic acid, citric acid, cyclohexane, isopropanol, vinyl chloride, a vinyl-based polymer, and a monomer crosslinked polymer. The monomer crosslinked polymer, for example, may include polyurethane, polyimide, polyacrylic acid, poly (N-methylpyrrolidone), polyamine, and polyvinyl alcohol, etc. The protein is a macromolecular protein, for example, may include a soybean protein and collagen, etc. Main components of the soybean protein include 11S globulin and 7S globulin, a molecular weight of the 11S globulin is 340 kDa, and a molecular weight of the 7S globulin is 440 kDa. A polysaccharide, for example, may include starch and cellulose, etc. As the particle size of molecules of the solute in the treatment solution is larger, convenience is provided for preferentially filling the macropores in an impregnating treatment process, such that the aperture of the macropores is reduced. As the aperture of the micropores is too small, the treatment solution is difficult to enter the micropores due to a capillary effect, such that the number of the macropores in the porous carbonaceous raw material is greatly reduced, and the number of the micropores and mesopores is increased.

In some embodiments, the solvent includes water and an organic solvent, the organic solvent includes at least one of an alcohol solvent, an ether solvent, an aliphatic hydrocarbon solvent, a ketone solvent, and dimethyl sulfoxide, and the solvent certainly may also be other types of solvents, which is not limited herein in the present disclosure.

In some embodiments, the treatment solution includes a polyether polyol grafted with a vinyl-based polymer, and the vinyl-based polymer, for example, may include polyethylene and polyvinyl chloride, etc.

In some embodiments, a particle size of particles of the solute is equal to or greater than 0.5 nm, specifically may be 0.5 nm, 1 nm, 2 nm, 3 nm, 4 nm, 5 nm, 6 nm, 8 nm, 10 nm, or 15 nm, etc., and certainly may also be other values within the above range, which is not limited herein in the present disclosure. It can be understood that the particle size of the particles of the solute in the treatment solution refers to the equivalent volume diameter, that is, the diameter of spheres in the particles of the solute in the treatment solution having same volume as real particles. For example, the particle size of the particles of the solute can be determined by a BI-90Plus laser particle size analyzer/Zeta potentiometer using a DLS (dynamic light scattering) principle.

In some embodiments, a concentration of the treatment solution is 1 mol/L-15 mol/L, specifically may be 1 mol/L, 3 mol/L, 5 mol/L, 7 mol/L, 10 mol/L, 12 mol/L, or 15 mol/L, etc., and certainly may also be other values within the above range, which is not limited herein in the present disclosure. Within the above range, convenience is provided for making the solute in the treatment solution enter the pores of the porous carbonaceous raw material and improving the utilization efficiency of the solute.

In some embodiments, a time of the impregnating is 1 h-15 h, specifically may be 1 h, 3 h, 5 h, 7 h, 10 h, 12 h, or 15 h, etc., and certainly may also be other values within the above range, which is not limited herein in the present disclosure.

In some embodiments, a device of the impregnating includes a vacuum impregnator.

In some embodiments, after impregnating the porous carbonaceous raw material in the treatment solution, the method further includes the step of drying a material obtained by the impregnating.

In some embodiments, a temperature of the drying is -40 °C to 600 °C, specifically may be -40 °C, -20 °C, -10 °C, 0 °C, 30 °C, 50 °C, 100 °C, 200 °C, 300 °C, 400 °C, 500 °C, or 600 °C, etc., and certainly may also be other values within the above range, which is not limited herein in the present disclosure.

In some embodiments, a time of the drying is 0.5 h-24 h, specifically may be 0.5 h, 1 h, 3 h, 5 h, 8 h, 12 h, 16 h, 20 h, or 24 h, etc., and certainly may also be other values within the above range, which is not limited herein in the present disclosure.

In some embodiments, the porous carbonaceous raw material is prepared by the following method: subjecting a carbon source to carbonization treatment, and mixing a material obtained by the carbonization treatment with an activator for activating treatment.

In some embodiments, the carbon source includes at least one of lignin, a coconut shell, a fruit shell, a peanut shell, a rice husk, coal-based biomass, and a resin. The coal-based biomass is biomass briquette, such as a product obtained by low-pressure compression of sawdust, agricultural waste, and paper, etc. The resin, for example, may include polyethylene (PE), polypropylene (PP), polyvinyl chloride (PVC), and polystyrene (PS), etc.

In some embodiments, a time of the carbonization is 1 h-20 h, specifically may be 1 h, 3 h, 5 h, 10 h, 12 h, 15 h, 18 h, and 20 h, etc., and certainly may also be other values within the above range, which is not limited herein in the present disclosure.

In some embodiments, the carbonization is carried out in an atmosphere of a protective gas, and the protective gas includes at least one of nitrogen, helium, neon, argon, krypton, and xenon.

In some embodiments, after the material obtained by the carbonization treatment is obtained, the method further includes: subjecting the material obtained by the carbonization treatment to acid pickling, and an acid used for the acid pickling includes at least one of hydrochloric acid, sulfuric acid, nitric acid, hydrofluoric acid, phosphoric acid, perchloric acid, acetic acid, and benzoic acid.

In some embodiments, a concentration of an acid pickling solution is 1 mol/L-10 mol/L, for example, may be 1 mol/L, 3 mol/L, 5 mol/L, 8 mol/L, or 10 mol/L, etc., and certainly may also be other values within the above range, which is not limited herein. It can be understood that the acid pickling is for the purpose of removing impurities in the material, the material obtained by the carbonization treatment is subjected to acid pickling and then washed with deionized water, and a product is washed to nearly neutral.

In some embodiments, a time of the acid pickling is 3 h-8 h, for example, may be 3 h, 4 h, 5 h, 6 h, 7 h, or 8 h, etc., and certainly may also be other values within the above range, which is not limited herein.

In some embodiments, the activator used for the activating treatment may be a gaseous activator or a solid activator. Exemplarily, the gaseous activator includes at least one of water vapor, oxygen, and air, the solid activator includes an alkaline substance, and the alkaline substance includes at least one of sodium hydroxide, potassium hydroxide, lithium hydroxide, calcium hydroxide, and rubidium hydroxide.

In some embodiments, when the activator is the gaseous activator, the activator reacts with carbon at high temperature through gaseous water vapor, oxygen and air to produce hydrogen and carbon monoxide, and the material obtained by the carbonization treatment is etched by the reaction to obtain a carbon matrix with activated pores.

In some embodiments, a concentration of the gaseous activator is 3%-20%, specifically may be 3%, 5%, 7%, 9%, 10%, 12%, 15%, 18%, and 20%, etc., and certainly may also be other values within the above range, which is not limited herein in the present disclosure. Within the above limited range, the activator has a larger addition amount and a stronger activating ability, many evenly distributed activated pores can be formed in the material obtained by the carbonization treatment, and convenience is provided for subsequently filling the active substance such as silicon particles in the activated pores.

It can be understood that when the activator is the water vapor, a concentration of the water vapor can be considered as the humidity of the water vapor.

In some embodiments, when the activator is the solid activator, a mass ratio of the material obtained by the carbonization treatment to the activator is 1:(0.5-30), specifically may be 1:0.5, 1:1, 1:5, 1:10, 1:20, and 1:30, etc., and certainly may also be other values within the above range, which is not limited herein. Within the above limited range, the activator has a larger addition amount and a stronger activating ability, many evenly distributed activated pores can be formed in the material obtained by the carbonization treatment, and convenience is provided for subsequently filling the active substance such as silicon particles in the activated pores.

In some embodiments, a time of the activating treatment is 1 h-20 h, for example, may be 1 h, 5 h, 8 h, 10 h, 12 h, 15 h, 18 h, or 20 h, etc., and certainly may also be other values within the above range, which is not limited herein in the present disclosure.

In some embodiments, a temperature of the activating treatment is 500 °C-1,200 °C, specifically may be 500 °C, 600 °C, 700 °C, 800 °C, 900 °C, 950 °C, 1,000 °C, 1,100 °C, and 1,200 °C, etc., and certainly may also be other values within the above range, which is not limited herein in the present disclosure.

It can be understood that the porous carbonaceous raw material may also be used directly by purchasing a finished product of porous carbon through a commercial approach.

In step S200, the carbon matrix is subjected to vapor deposition by a vapor-phase active substance precursor to obtain an anode material.

In the present disclosure, as the carbon matrix is subjected to the vapor deposition by the vapor-phase active substance precursor, an active substance generated by the vapor-phase active substance precursor can be filled in the micropores of the carbon matrix, thereby further reducing the proportion of the micropores in the anode material, improving the compaction density of the anode material, reducing the specific surface area, reducing the problems of crushing, cracks and the like of the anode material in a rolling process, and improving the processing performance and cycle performance of the anode material. Moreover, as the active substance is deposited in in the micropores of the carbon matrix, so that silicon segregation does not occur easily, which is beneficial to improve the tap density of the anode material, thereby improving the capacity, initial efficiency and cycle performance of the anode material.

In some embodiments, the vapor-phase active substance precursor includes a gaseous silicon source.

In some embodiments, the gaseous silicon source includes at least one of silane, hexylsilane, and trisilane.

In some embodiments, an introduced concentration of the vapor-phase active substance precursor is 5%-30%, specifically may be 5%, 8%, 10%, 12%, 15%, 18%, 20%, 23%, 26%, 28%, or 30%, etc., and certainly may also be other values within the above range, which is not limited herein in the present disclosure.

In some embodiments, a temperature of the vapor deposition is 300 °C-800 °C, specifically may be 300 °C, 400 °C, 500 °C, 600 °C, 700 °C, and 800 °C, etc., and certainly may also be other values within the above range, which is not limited herein in the present disclosure.

In some embodiments, a heat preservation time of the vapor deposition is 2 h-25 h, specifically may be 2 h, 5 h, 10 h, 15 h, 20 h, and 25 h, etc., and certainly may also be other values within the above range, which is not limited herein in the present disclosure.

The present disclosure controls the temperature and time of vapor deposition and the introduction concentration of a gas-phase active substance precursor, and can control the mass ratio of silicon to carbon in a compound, so that an anode material prepared from the compound has a high capacity and a first efficiency at the same time.

Step S300: Perform a preoxidation treatment on the composite, and then perform carbon cladding treatment by using a carbon source, so as to obtain an anode material.

In some embodiments, a mixed gas containing an oxidizing gas and a protective gas is introduced into the composite, heated to 100 °C-500 °C, and maintained for 0.1 min-300 min, so as to obtain a pre-oxidizing precursor.

In some embodiments, the oxidizing gas includes at least one of oxygen, O₃, NOₓ, hydrogen peroxide, water vapor, and bromine gas.

In some embodiments, the protective gas comprises at least one of nitrogen, argon, helium, hydrogen, etc.

In some embodiments, the volume proportion of the oxidizing gas is 0.01%-10% based on the volume of the mixed gas being 100%, and may specifically be 0.01%, 0.1%, 0.2%, 0.5%, 0.8%, 1.0%, 1.5%, 2%, 3%, 5%, 6%, 8%, 10%, or the like. Certainly, the volume proportion may also be other values within the foregoing range, which is not limited herein.

In some embodiments, the carbon source includes at least one of a gaseous carbon source and a solid carbon source.

In some embodiments, the gaseous carbon source includes at least one of acetylene, methane, propylene, benzene, ethanol, methanol, ethylene, propane, and butane.

In some embodiments, an introduced flow quantity of the gaseous carbon source is 0.1 L/min-100 L/min, specifically may be 0.1 L/min, 1 L/min, 10 L/min, 30 L/min, 60 L/min, and 100 L/min, etc., and certainly may also be other values within the above range, which is not limited herein in the present disclosure.

In some embodiments, the solid carbon source includes at least one of sucrose, fructose, glucose, asphalt, a phenolic resin, polyimide, citric acid, an epoxy resin, an amino resin, polystyrene, polyacrylic acid, carboxymethyl cellulose, and cellulose acetate butyrate.

In some embodiments, a mass ratio of the solid carbon source to precursor is (1-100):100, specifically may be 1:100, 10:100, 30:100, 50:100, 80:100, and 100:100, etc., and certainly may also be other values within the above range, which is not limited herein in the present disclosure.

In some embodiments, a temperature of the carbon coating treatment is 600 °C-1,100 °C. Specifically may be 600°C, 650°C, 700°C, 800°C, 900°C, 1,000°C, and 1,100°C, etc., and certainly may also be other values within the above range, which is not limited herein in the present disclosure. If the temperature of the carbon coating treatment is lower than 600 °C, the carbon source is not completely carbonized, and a dense carbon layer cannot be obtained; If the temperature of the carbon coating treatment is higher than 1100 °C, the size of the grains of silicon particles increases rapidly, which deteriorates the cycle characteristics and expansion characteristics of the anode material.

In some embodiments, the heat preservation time of the carbon coating treatment is 2 h-10 h, specifically 2 h, 5 h, 7 h, 8 h, 10 h, etc., and certainly can also be other values within the described ranges, which is not limited in the present disclosure.

In some embodiments, the method further comprises the steps of sieving and classifying the carbon coating product.

An embodiment of the present disclosure further provides an anode sheet. The anode sheet includes an anode current collector and an anode active substance distributed on one side of the anode current collector, and the anode active substance includes the anode material described above or an anode material prepared by the preparation method described above.

In some embodiments, a critical pressure for pressure resistance (P) of the anode sheet is equal to or greater than 100 MPa, specifically may be 100 MPa, 120 MPa, 150 MPa, 200 MPa, 250 MPa, 300 MPa, 350 MPa, 400 MPa, 500 MPa, 600 MPa, etc., and certainly may also be other values within the above range, which is not limited herein in the present disclosure. Within the above range, the critical pressure for pressure resistance (P) of the anode material of the present disclosure is larger, indicating that the anode sheet of the present disclosure has excellent pressure resistance, which is conducive to improving the processing performance of the anode sheet. It can be understood that the critical pressure for pressure resistance refers to a pressure when the anode sheet stays in a critical state, namely a maximum pressure when anode material particles in the anode sheet are not crushed. The critical pressure for pressure resistance of the anode sheet is obtained by the following test method: the thickness of the anode sheets is 60 µm; in a pressurized state, an electron scanning microscope (SEM) is used to observe a cut surface of a single anode sheet; and when the anode material particles are broken, a corresponding minimum pressure is P.

In some embodiments, a compaction density of the anode sheet is 1.3 g/cm³-1.9 g/cm³, specifically may be 1.3 g/cm³, 1.4 g/cm³, 1.5 g/cm³, 1.6 g/cm³, 1.7 g/cm³, 1.8 g/cm³, or 1.9 g/cm³, etc., and certainly may also be other values within the above range, which is not limited herein in the present disclosure. Within the above limited range, the compaction density of the anode sheet of the present disclosure is larger, the size of internal pores of the anode sheet is smaller, and convenience is provided for improving the capacity, initial efficiency and cycle performance of the anode sheet.

The embodiments of the present disclosure also provide a battery, comprising the described anode material or the anode material prepared by the described preparation method.

In some embodiments, the battery of the present disclosure comprises a lithium ion battery or a sodium ion battery, and the lithium ion battery may be any one of a cylindrical battery and a square battery.

Persons skilled in the art will understand that a preparation method for the lithium-ion battery described above is only an embodiment. On the basis of not deviating from the contents disclosed in the present disclosure, other methods commonly used in the art may be used.

The embodiments of the present disclosure are further descried below through several embodiments. The embodiments of the present disclosure are not limited to the following specific embodiments. Appropriate changes may be made for implementation without deviating from the scope of principal rights.

### Embodiment 1

(1) A coconut shell was subjected to carbonization treatment at a carbonization temperature of 850°C and then subjected to acid pickling with hydrochloric acid with a concentration of 8 mol/L for 3 h. After a resulting material was dried, a mixed gas of water vapor and nitrogen was introduced for activating treatment, where a concentration of the water vapor was 8%, a time of the activating was 7 h, and a temperature of the activating was 750°C, so as to obtain a carbonized material.
(2) The carbonized material was placed in a molding press, a pressure was set at 250 MPa for pressing for 50 min, and then the pressed material was crushed and screened to obtain a carbon matrix.
(3) The carbon matrix was placed in a CVD device, then silane was introduced into the CVD device, a concentration of the silane was controlled to 5%, and the temperature was raised to 480 °C to carry out a reaction for 9h, a composite was obtained.
(4) Introducing a gas mixture of oxygen and nitrogen into the reciprocating compound at 0.03%, heating to 230 °C, and maintaining the temperature for 100 min to obtain a precursor.
(5) The precursor was placed in a reaction furnace, a methane gas with a concentration of 12% was introduced, heat treatment was carried out at 720 °C, heat preservation was carried out for 2 h, and a resulting material was screened and graded to obtain an anode material.

In this embodiment, the anode material includes a carbon matrix and silicon particles, and the silicon particles are dispersed in the carbon matrix.

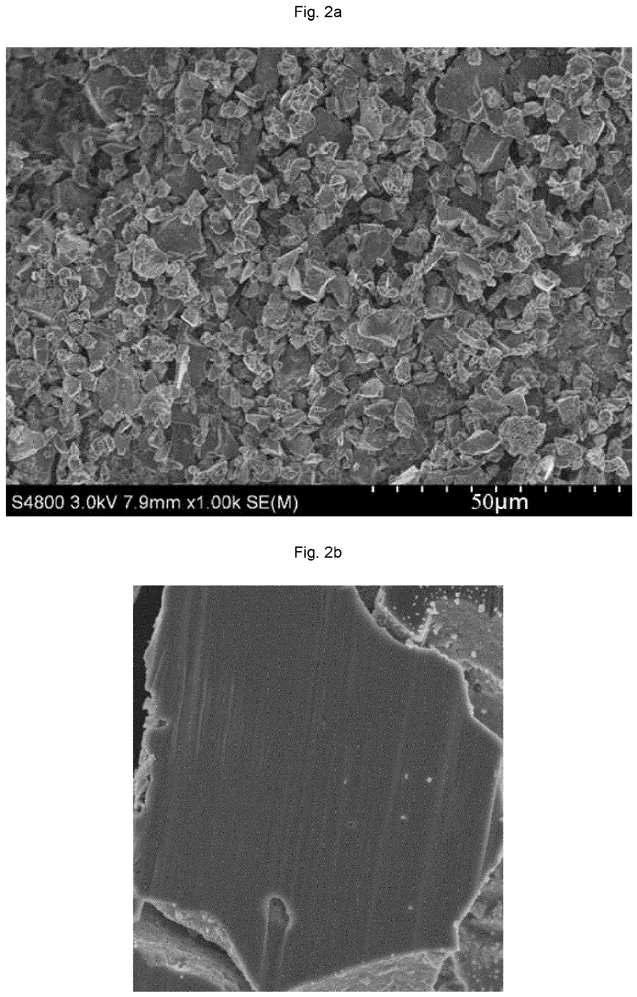

Fig. 2a is an SEM picture of the anode material prepared in Embodiment 1, Fig. 2b is an SEM picture of a particle section of the anode material prepared in Embodiment 1, and it can be seen from Figs. 2a and 2b that very few macropores exist in the anode material.

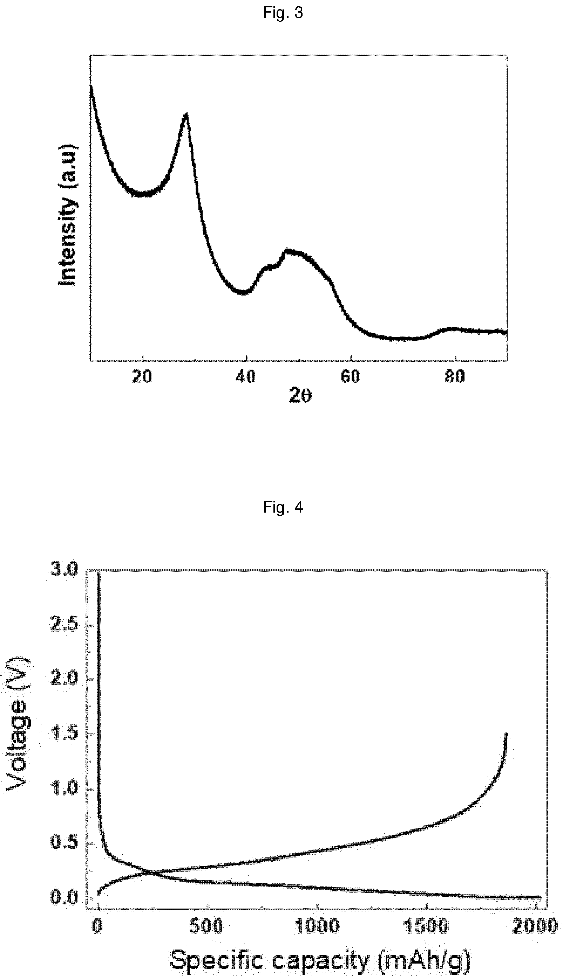

Fig. 3 is an XRD diagram of the anode material prepared in Embodiment 1, and silicon particles in the anode material prepared in Embodiment 1 are amorphous silicon.

Fig. 4 shows first charge-discharge curves of the anode material prepared in Embodiment 1. As can be seen from Fig. 4, the anode material has a relatively high first charge-discharge capacity of 1,933 mAh/g and an initial efficiency of 92.5%.

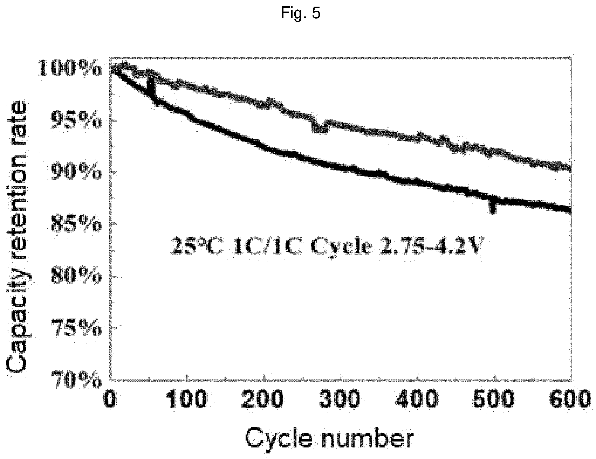

Fig. 5 shows a cycle performance curve of the anode material prepared in Embodiment 1. As can be seen from Fig. 5, the anode material has excellent cycle performance and a capacity retention rate of 90.8% after 500 cycles.

### Embodiment 2

This embodiment differed from the first embodiment in that:
(1) Taking a commercialized resin-based porous carbon as a raw material, placing the porous carbon material in a vacuum impregnation machine, adding benzyl alcohol, setting a vacuum pressure to 100 Pa, performing vacuum impregnation for 50 min, and then performing heat treatment at 600 °C for 4 h, so as to obtain a carbon matrix.
(2) The carbon matrix was placed in a CVD device, then silane was introduced into the CVD device, a concentration of the silane was controlled to 9%, and the temperature was raised to 480 °C to carry out a reaction for 9h, a composite was obtained.

The subsequent steps are the same as those in Embodiment 1.

In this embodiment, the anode material includes a carbon matrix and silicon particles, and the silicon particles are dispersed in the carbon matrix. Other parameters of the anode material are shown in Tables 1 and 2.

### Embodiment 3

(1) Carbonizing is performed at 900 °C by using a phenolic resin as a raw material, and then the carbonized material and KOH are mixed at a mixing ratio of 100:5, and then activation is performed at an activation temperature of 880 °C for 9 h, so as to obtain a carbon matrix.
(2) The carbon matrix was placed in a CVD device, then silane was introduced into the CVD device, a concentration of the silane was controlled to 14%, and the temperature was raised to 480 °C to carry out a reaction for 9h, a composite was obtained.

The subsequent steps are the same as those in Embodiment 1.

In this embodiment, the anode material includes a carbon matrix and silicon particles, and the silicon particles are dispersed in the carbon matrix. Other parameters of the anode material are shown in Tables 1 and 2.

### Embodiment 4

(1) A fruit shell was subjected to carbonization treatment at a carbonization temperature of 950 °C and then subjected to acid pickling with hydrochloric acid with a concentration of 4 mol/L for 5 h. After a resulting material was dried, a mixed gas of water vapor and nitrogen was introduced for activating treatment, where a concentration of the water vapor was 7%, a time of the activating was 9 h, and a temperature of the activating was 920°C, so as to obtain a carbonized material.
(2) Placing the carbonized material into a vacuum impregnation machine, adding a 20% starch solution, setting a vacuum pressure to 70 Pa, performing vacuum impregnation for 150 min, and then performing heat treatment at 580°C for 4 h to obtain the carbon matrix.
(3) The carbon matrix was placed in a CVD device, then silane was introduced into the CVD device, a concentration of the silane was controlled to 14%, and the temperature was raised to 480 °C to carry out a reaction for 9h, a composite was obtained.

The subsequent steps are the same as those in Embodiment 1.

In this embodiment, the anode material includes a carbon matrix and silicon particles, and the silicon particles are dispersed in the carbon matrix. Other parameters of the anode material are shown in Tables 1 and 2.

### Embodiment 5

(1) A fruit shell was subjected to carbonization treatment at a carbonization temperature of 950 °C and then subjected to acid pickling with hydrochloric acid with a concentration of 4.5 mol/L for 5 h. After a resulting material was dried, a mixed gas of water vapor and nitrogen was introduced for activating treatment, where a concentration of the water vapor was 6.9%, a time of the activating was 8 h, and a temperature of the activating was 690 °C, so as to obtain a carbonized material.
(2) Placing the carbonized material into a vacuum impregnation machine, adding dodecane, setting a vacuum pressure to 15 Pa, performing vacuum impregnation for 150 min, and then performing heat treatment at 600 °C for 4 h to obtain the carbon matrix.
(3) The carbon matrix was placed in a CVD device, then silane was introduced into the CVD device, a concentration of the silane was controlled to 5%, and the temperature was raised to 540 °C to carry out a reaction for 5h, a composite was obtained.

The subsequent steps are the same as those in Embodiment 1.

In this embodiment, the anode material includes a carbon matrix and silicon particles, and the silicon particles are dispersed in the carbon matrix. Other parameters of the anode material are shown in Tables 1 and 2.

### Embodiment 6

(1) Taking pitch as a raw material, adding NaOH for activation, the mass ratio being 100: 2.3, the activation time being 8 h, and the activation temperature being 760°C, so as to obtain a carbonized material.
(2) Placing the carbonized material into a vacuum impregnation machine, adding a 10% starch solution, setting a vacuum pressure to 15 Pa, performing vacuum impregnation for 150 min, and then performing heat treatment at 600 °C for 4 h to obtain the carbon matrix.
(3) The carbon matrix was placed in a CVD device, then silane was introduced into the CVD device, a concentration of the silane was controlled to 5%, and the temperature was raised to 540 °C to carry out a reaction for 4h, a composite was obtained.

The subsequent steps are the same as those in Embodiment 1. In this embodiment, the anode material includes a carbon matrix and silicon particles, and the silicon particles are dispersed in the carbon matrix. Other parameters of the anode material are shown in Tables 1 and 2.

### Embodiment 7

The only difference from Embodiment 1 was that the pressing was performed for 30 min at a pressure of 250 MPa in step (2).

### Embodiment 8

The only difference from Embodiment 1 was that the pressing was performed for 50 min at a pressure of 240 MPa in step (2).

### Embodiment 9

The only difference from Embodiment 1 was that the pressing was performed for 50 min at a pressure of 230 MPa in step (2).

### Embodiment 10

The difference from Embodiment 1 merely lied in that: (4) a mixture gas of water vapour and nitrogen of 0.05% was introduced into the composite, the temperature was increased to 230 °C, and the temperature-holding time was 100 min to obtain a precursor.

### Embodiment 11

The difference from Embodiment 1 merely lied in that: (4) a mixture gas of H₂O₂ and nitrogen of 0.05% was introduced into the composite, the temperature was increased to 230 °C, and the temperature-holding time was 100 min to obtain a precursor.

### Embodiment 12

The difference from Embodiment 1 merely lied in that: (4) a mixture gas of oxygen and nitrogen of 0.03% was introduced into the composite, the temperature was increased to 630 °C, and the temperature-holding time was 100 min to obtain a precursor.

### Embodiment 13

The difference from Embodiment 1 merely lied in that: (4) a mixture gas of oxygen and nitrogen of 5% was introduced into the composite, the temperature was increased to 230 °C, and the temperature-holding time was 100 min to obtain a precursor.

### Embodiment 14

The difference from Embodiment 1 merely lied in that: (4) a mixture gas of oxygen and nitrogen of 0.03% was introduced into the composite, the temperature was increased to 230 °C, and the temperature-holding time was 360 min to obtain a precursor.

### Comparative Embodiment 1

The difference from Embodiment 1 only lied in that: the pressure was 90 MPa;
In this comparative embodiment, the anode material includes a carbon matrix and silicon particles, the silicon particles being dispersed in the carbon matrix. Other parameters of the anode material are shown in Tables 1 and 2.

### Comparative Embodiment 2

The difference from Embodiment 2 only lied in that: the set pressure in step (2) is a normal pressure.

In this comparative embodiment, the anode material includes a carbon matrix and silicon particles, the silicon particles being dispersed in the carbon matrix. Other parameters of the anode material are shown in Tables 1 and 2.

### Comparative Embodiment 3

The difference from Embodiment 1 only lied in that: the carbonized material is not put into a molding machine for molding.

### Comparative Embodiment 4

The difference from Embodiment 1 only lied in that:
(4) a mixture gas of oxygen and nitrogen of 15% was introduced into the composite, the temperature was increased to 230 °C, and the temperature-holding time was 100 min to obtain a precursor.

### Performance testing

1. Diameter, Pore Volume Rationing Test Method for Anode Material:
The carbon material is tested using a physico iPore620 pore size analyser and a BET pore size distribution test method, and the pore size distribution data of the carbon material is obtained by means of DFT simulation analysis using an isothermal adsorption characteristic curve of nitrogen, so as to obtain the volume ratio of the total pore volume, micropores, mesopores and macropores of the carbon material in the total pore volume.
2. Performing SEM cutting surface treatment on the anode material particles, and using the Aztec Feature software of the SEM electron microscope OXFORD Instruments to make statistics and calculate the areas of individual anode material particles and the areas of all the pores, specifically:
(1) Electron Mirror and Spectral Conditions
   Electron Mirror:
   Selecting a target particle region to be monodispersed as far as possible, and adjusting and integrating appropriate parameters (an acceleration voltage of 20 kV or 15 kV, and an electron beam rotating at 0 degrees), so as to obtain a clear backscatter field of view.
   Energy spectrum: turning on AZtec Feature software during testing, and performing probe cooling; and when an energy spectrum probe normally lights up a blue indicator lamp, starting testing.
(2) Testing Procedure
   Provided was a reference sample matrix of an anode material of the present disclosure. The field of view was firstly moved onto the reference sample matrix, the brightness contrast was adjusted, and the image grayscale of the reference sample matrix was acquired, so as to ensure that the grayscale of the anode material particles and the reference sample matrix was pulled open in the present disclosure. Note that the luminance contrast of the mirror cannot be adjusted again after the reference image gradation was adjusted.
   Moving a field of view onto monodisperse anode material particles, collecting a BSE electron image, adjusting and setting a suitable threshold range, so that the field of view had typical characteristic particles, and the size and grey scale were moderate, and the particle marking under the field of view was optimized. (Particles may be selected at that time by threshold filtering, fold-image resolution filtering, pixel filtering, and secondary image filtering, etc.).
   Setting an anode material particle detection method, a filtering condition, collection time and the like; selecting, under the filtering condition, a pore with a pore diameter greater than 50 nm; and after the setting was completed, clicking to detect the anode material particle, i.e. obtaining, on the right side of software, information (such as the number of pores, an element list and the content) about an anode material particle list complying with the condition.
   After the AZtec Feature operation was completed, the user may check all detected features in this interface, and may re-locate the specified features and re-collect the images and spectra. After a feature of interest (i.e. a hole with a pore diameter of greater than 50 nm in the present disclosure) was highlighted, a square region of 10 µm × 10 µm was selected, the cross sectional area of the anode material particle in the square region was S, the sum of the cross sectional areas of all the pores with a pore diameter of greater than 50 nm in the cross section of the anode material particle in the square region was S1, α' = S1/S, and then an arithmetic mean of the α' values of at least 10 anode material particles was calculated, i.e. α.

3. The median particle size of an anode material and a carbon matrix was tested by a laser particle size analyzer.
4. After etching of a silicon-based active substance in an anode material with HF, the average aperture of pores was tested by a Micromeritics ASAP 2460 full-automatic specific surface and porosity analyzer of the United States, and a gas used in the test was CO₂ or N₂.
5. A method for testing an average particle diameter of silicon particles and a carbon matrix: testing a maximum cross length of 20 silicon particles using a high power microscope, and then calculating an average value of cross lengths of a plurality of silicon particles, that was, the average particle diameter of the silicon particles. Likewise, the maximum cross length of the 20 carbon matrix was tested using a high power microscope, and then the average value of the cross lengths of the plurality of carbon matrix was calculated, i.e. the average particle size of the silicon particles.
6. The electrochemical performance of an anode material was tested by the following method:
An anode material, a conductive agent and a binder were dissolved in a solvent at a mass ratio of 94:1:5, a solid content was controlled to 50%, and a resulting mixture was coated on a copper foil current collector and then subjected to vacuum drying, then controlling the compacted density to be 1.7 g/cm³-1.8 g/cm³ and the thickness of the electrode sheet to be 60µm-70 µm micrometers, and rolling to produce an anode sheet. Then, a ternary positive electrode plate prepared by a traditional mature process, a 1 mol/L electrolyte containing LiPF₆ or EC, DMC, and EMC (v/v/v=1:1:1), a Celgard2400 diaphragm, and a shell were assembled into a 18650 cylindrical single battery by a conventional production process. A charge-discharge test of the cylindrical battery was carried out in a LAND battery test system of Wuhan Jinuo Electronics Co., Ltd., charging and discharging were carried out at a constant current of 0.2 C under normal temperature conditions, and a charge-discharge voltage was limited to 2.75 V-4.2 V. Test results are shown in Table 1 to Table 2, where Embodiment 1 to Embodiment 11 are recorded as S1 to S11, and Comparative Embodiment 1 to Comparative Embodiment 4 are recorded as D1 to D4.
7. A pressure resistance test was carried out on an anode sheet by the following method:
An anode material, a conductive agent and a binder were dissolved in a solvent at a mass ratio of 94:2:4, a solid content was controlled to 30%, and a resulting mixture was coated on a copper foil current collector and then subjected to vacuum drying to obtain an anode sheet. Then, the anode sheet was subjected to counter-roller pressing by a counter-roller press at a set pressure, a thickness of the anode sheet was controlled at 60µm-70 µm, then a section test was carried out on the anode sheet, whether particles were crushed in the anode sheet was observed, and a corresponding minimum pressure value when the particles were crushed was the critical pressure for pressure resistance (P) of the anode sheet.
8. The compaction density of an anode sheet was tested according to Appendix L of GBT 24533-2019.

**Table 1. Performance parameters of the anode materials of each embodiment and comparative embodiment**

| Sample | | (I_{D}+I _{G})/I_{A} | | | Specific surface | Anode material with silicon particles removed | | |
|---|---|---|---|---|---|---|---|---|
| | Mesoporous ratio ( %) | | Oxygen element (wt%) | Silicon element (wt%) | area ( m²/g ) | Total pore volume ( cm³/g) | Average pore diameter ( nm) | **Specific** surface area ( m²/g ) |
| S1 | 88 | 15.2 | 1.9 | 50 | 2.9 | 1.27 | 2.5 | 1955 |
| S2 | 86 | 14.5 | 1.8 | 48 | 3.1 | 1.21 | 1.8 | 2095 |
| S3 | 90 | 14.5 | 2.0 | 52 | 3.7 | 1.38 | 1.7 | 2234 |
| S4 | 89 | 11.9 | 2.1 | 49 | 3.4 | 1.23 | 1.9 | 2044 |
| S5 | 87 | 12.2 | 2.1 | 48 | 2.8 | 1.22 | 2.6 | 1905 |
| S6 | 92 | 12.5 | 2.0 | 45 | 2.4 | 1.05 | 2.4 | 1967 |
| S7 | 85 | 16.4 | 1.9 | 49 | 2.1 | 1.29 | 2.7 | 2313 |
| S8 | 87 | 15.8 | 1.8 | 49.5 | 2.8 | 1.275 | 2.7 | 2231 |
| S9 | 82 | 14.9 | 1.8 | 47 | 2.5 | 1.28 | 2.8 | 2011 |
| S10 | 89 | 17.3 | 2.1 | 50 | 2.8 | 1.26 | 2.5 | 1998 |
| S11 | 87 | 15.5 | 2.0 | 50 | 3.0 | 1.28 | 2.4 | 1975 |
| S12 | 88 | 15.1 | 6.9 | 50.1 | 2.9 | 1.27 | 2.5 | 1952 |
| S13 | 87 | 14.9 | 7.3 | 50.0 | 2.9 | 1.26 | 2.5 | 1947 |
| S14 | 87.2 | 15.2 | 5.9 | 50.1 | 2.9 | 1.25 | 2.5 | 1945 |
| D1 | 81 | 14.6 | 1.1 | 49.3 | 3.5 | 1.17 | 2.4 | 1935 |
| D2 | 58 | 14.3 | 1.2 | 48.3 | 3.7 | 1.32 | 2.2 | 1923 |
| D3 | 67 | 15.2 | 1.3 | 49.6 | 3.9 | 1.34 | 3.1 | 1845 |
| D4 | 87 | 15.6 | 8.3 | 50.4 | 2.9 | 1.29 | 2.5 | 1945 |

**Table 2. Alpha test of anode material of each embodiment and comparative embodiment**

| Sample | α ( %) | I_{A}/ ( I_{B}+I_{C}) | Compaction of anode sheet g/cm³ | Critical pressure P ( MPa) | **Primary specific** capacity ( mAh/g) | First Coulombic efficiency ( %) | **600-week** cycle ( %) |
|---|---|---|---|---|---|---|---|
| S1 | 1.2 | 0.32 | 1.75 | 210 | 1933 | 92.3 | 90.8 |
| S2 | 0.09 | 0.44 | 1.81 | 304 | 1892 | 92.2 | 91.5 |
| S3 | 0.017 | 0.49 | 1.86 | 290 | 2020 | 92.4 | 91.9 |
| S4 | 1.1 | 0.37 | 1.74 | 190 | 1913 | 92.3 | 90.1 |
| S5 | 2.4 | 0.56 | 1.72 | 190 | 2045 | 92.1 | 90.0 |
| S6 | 0.08 | 0.31 | 1.83 | 330 | 1995 | 92.2 | 91.4 |
| S7 | 4.1 | 0.32 | 1.71 | 180 | 1914 | 92.0 | 90.0 |
| S8 | 5.3 | 0.32 | 1.69 | 171 | 1905 | 92.1 | 89.9 |
| S9 | 6.9 | 0.32 | 1.68 | 165 | 1898 | 92.2 | 89.5 |
| S10 | 1.2 | 0.315 | 1.75 | 209 | 1939 | 92.0 | 89.9 |
| S11 | 1.3 | 0.31 | 1.72 | 208 | 1923 | 92.3 | 89.8 |
| S12 | 1.2 | 0.305 | 1.74 | 211 | 1895 | 89.4 | 91.2 |
| S13 | 1.2 | 0.30 | 1.73 | 206 | 1855 | 89.6 | 91.8 |
| S14 | 1.2 | 0.307 | 1.74 | 206 | 1885 | 89.6 | 91.4 |
| D1 | 13 | 0.35 | 1.61 | 83 | 1923 | 92.2 | 86.1 |
| D2 | 12 | 0.11 | 1.56 | 79 | 1977 | 92.1 | 85.5 |
| D3 | 18 | 0.35 | 1.50 | 68 | 1903 | 92.0 | 80.8 |
| D4 | 1.3 | 0.20 | 1.60 | 182 | 1795 | 87.5 | 92.1 |

According to Table 1 and Table 2, the number of macropores and the volume of macropores in the anode material prepared in the present disclosure were smaller, meeting that α was equal to or less than 10%, which could effectively reduce the specific surface area of the anode material, reduce the occurrence of side reactions between the anode material and an electrolyte in a first charge-discharge process, reduce gas production. At the same time, IA/(IB+IC) was controlled to reduce the contact between the silicon particles in the anode material and the electrolyte, and the two cooperate to further reduce the direct contact between the silicon particles and the electrolyte. The surface of the anode material was provided with a stable solid electrolyte membrane, which improves the specific capacity of the anode material and the cycle stability of the anode material at the same time.

According to the test data in embodiment 1 and embodiment 7 and embodiment 9, it could be seen that the reduction of the impregnation pressure of the carbonized material or the reduction of the impregnation time will affect the total pore volume and the size of the average pore diameter of the carbon matrix. Generally, with the reduction of the impregnation pressure, the penetration amount of the treatment solution into the porous carbonaceous material decreases, the total pore volume of the carbon matrix increases, and the average pore diameter also increases. As a result, after silicon particles were deposited, the volume proportion of mesopores of the anode material was reduced, the number and volume proportion of macropores in the anode material were increased, the α value was increased, and the cycle performance of the anode material was slightly reduced.

According to the test data of Embodiment 1 and Embodiment 10 and Embodiment 14, it could be seen that as the degree of oxidation of the precursor was different, the capacity of the anode material changes accordingly, the higher the degree of oxidation was, the lower the capacity was, but the cycle was better.

In Comparative Embodiment 1 and Comparative Embodiment 2, the porous carbonaceous raw material in Comparative Embodiment 1 and Comparative Embodiment 2 were subjected to pressurizing treatment at a too small pressure, the macropores in the anode material had a larger number and a larger aperture, leading to the problems of low capacity, low initial efficiency and poor cycle performance of the anode material. Moreover, when the anode material was prepared into an anode sheet, the anode sheet had smaller critical pressure for pressure resistance (P) and compaction density, leading to deterioration of the processing performance of the anode sheet.

In Comparative Embodiment 3, no molding process was performed on the carbonized material in the molding machine, so that the number of large pores in the anode material was obviously increased, The silicon particles were not effectively filled into the micropores of the carbon matrix, and some of the silicon particles were located on the surface of the carbon matrix, As a result, the anode material had the problems of low capacity, low first-time efficiency, and poor cycle performance. Moreover, the anode material was prepared as an anode sheet, The anode electrode sheet had a low withstand voltage threshold pressure P and low compaction density, which deteriorates the processability of the anode electrode sheet.

In comparative embodiment 4, the amount of the introduced oxygen was too large, resulting in an excessively high oxidation degree of silicon particles in the anode material, and the capacity and the first Coulombic efficiency of the anode material were obviously reduced.

## Claims

1. An anode material, comprising a carbon matrix and silicon material, wherein the silicon material is dispersed in the carbon matrix;
testing the anode material with Raman spectroscopy, wherein the anode material has a first characteristic peak at 520±10 cm⁻¹, and the peak intensity of the first characteristic peak is IA; there is a second characteristic peak at 960±10 cm⁻¹, the peak intensity of said second characteristic peak being IB; there is a third characteristic peak at 480±10 cm⁻¹, the peak intensity of said third characteristic peak being IC, and the following relationships exist between IA, IB and IC: 0.3 ≤ IA/(IB+IC) ≤ 0.6; and the anode material satisfies: α≤10%;
wherein the α is obtained by the following test method:
in an electron microscope image shown by SEM section processing of a single anode material particle, a 10µm×10µm square region is selected, a sectional area of the anode material particles in the square region is recorded as S, a sum of sectional areas of all pores with a pore diameter of greater than 50 nm in the region of the section of the anode material particles in the square region is recorded as S₁, α' = S₁/S, and the α is an arithmetic mean value of α' values of at least 10 anode material particles.

2. The anode material according to claim 1, wherein the silicon material comprises silicon particles.

3. The anode material according to claim 1, wherein the anode material has pores, wherein a volume proportion of mesopores in a total pore volume of the anode material is 25%-95%, as measured by a physico iPore620 pore size analyser and a BET method and DFT simulation analysis of nitrogen adsorption isotherm; and/or, a total pore volume of the anode material is 0.001 cm³/g-0.1 cm³/g, as measured by a physico iPore620 pore size analyser and a BET method and DFT simulation analysis of nitrogen adsorption isotherm.

4. The anode material according to claim 2, wherein an anode material with silicon particles removed has pores, and a total pore volume of the anode material with silicon particles removed is 0.4 cm³/g-1.5 cm³/g, as measured by a physico iPore620 pore size analyser and a BET method and DFT simulation analysis of nitrogen adsorption isotherm; and/or, the average pore size of the pores of the anode material with silicon particles removed is 1.0 nm-5.2 nm, as tested by Micromeritics ASAP 2460 full-automatic specific surface and porosity analyzer of the United States, and a gas used in the test was CO₂ or N₂.

5. The anode material according to claim 1, wherein at least a part of a surface of the anode material has a carbon layer, testing the surface of the anode material with Raman spectroscopy, in which the anode material has a characteristic peak D at 1350±10 cm⁻¹, the peak intensity of said characteristic peak D is ID, having a characteristic peak G at 1580±10 cm⁻¹, the peak intensity of said characteristic peak G being IG, then there is the following relationship between IA, ID, IG: (ID+IG)/IA ≥ 10.

6. The anode material according to any one of claims 1 to 5, wherein at least part of the silicon particles are located inside the particles of the carbon matrix.

7. The anode material according to any one of claims 1 to 5, wherein the anode material comprises at least one of the following features:
(1) the carbon matrix comprises at least one of hard carbon and soft carbon;
(2) the carbon matrix comprises porous carbon, the porous carbon comprises at least one of activated carbon, an activated carbon fiber, carbon black, capacitive carbon, mesoporous carbon, a carbon nanotube, and a carbon molecular sieve;
(3) a mass proportion of oxygen element in the anode material is ≤ 5%;
(4) a mass proportion of carbon element in the anode material is 30wt%-60wt%;
(5) a mass proportion of silicon element in the anode material is 30wt%-65wt%;
(6) at least a partial surface of the anode material is provided with a carbon layer, and the thickness of the carbon layer is 0.1 nm-3000 nm.

8. The anode material according to any one of claims 1 to 5, wherein the anode material comprises at least one of the following features:
(1) the anode material further comprises other active particles, and the other active particles comprise at least one of Li, Na, K, Sn, Ge, Fe, Mg, Ti, Zn, Al, P and Cu; and/or, the other active particles comprise at least one of Sn particles, Ge particles, Al particles; and/or, the other active particles comprise at least one of a silicon-lithium alloy, a silicon-magnesium alloy; and/or, the other active particles comprise elemental particles and alloys;
(2) the silicon particles comprise at least one of amorphous silicon, crystalline silicon, silicon oxide, silicon alloy, and composite of crystalline silicon and amorphous silicon;
(3) the silicon particles comprise amorphous silicon;
(4) the silicon particles have an average particle diameter of 0.1 nm to 100 nm, as determined by measuring the maximum cross length of 20 silicon particles using a high-power microscope and calculating the arithmetic mean thereof; preferably, the average particle size of the silicon particles is 0.1 nm-50 nm, more preferably, the average particle size of the silicon particles is 0.1 nm-5 nm.

9. The anode material according to any one of claims 1 to 5, wherein the specific surface area of the anode material is 1 m²/g-500 m²/g, as measured by BET method, as measured by BET method, the specific surface area of the anode material with silicon particles removed is 800 m²/g-2500 m²/g, as measured by BET method.

10. The anode material according to any one of claims 1 to 5, wherein a compaction density of the anode sheet made of the anode material is 1.3 g/cm³-1.9 g/cm³, as tested according to Appendix L of GBT 24533-2019, and/or a withstand voltage critical pressure P of the anode sheet made of the anode material is greater than or equal to 100 MPa, wherein the withstand voltage critical pressure P is the minimum pressure at which the anode material particles in the anode sheet are crushed as observed by SEM on a cross-section of the anode sheet.

11. A battery, wherein the battery comprises the anode material according to any one of claims 1-10.

12. The anode material according to claim 8, wherein the silicon oxide comprises a silicon element and an oxygen element, an atomic ratio of the silicon element to the oxygen element is 0-2:1, and does not include 0:1; preferably, the silicon oxide has the general chemical formula SiOₓ, where 0<x<2.

13. The anode material according to claim 7, wherein the mass ratio of silicon element to carbon element in the anode material is 0.8-2.0:1.

14. The anode material according to any one of claims 1 to 10, wherein the anode material also comprises a coating layer distributed on at least a part of the surface of the carbon matrix.

15. The anode material according to claim 14, wherein the thickness of the carbon layer is 0.1 nm to 3000 nm.

## Patentansprüche

1. Anodenmaterial, umfassend eine Kohlenstoffmatrix und ein Siliziummaterial, wobei das Siliziummaterial in der Kohlenstoffmatrix dispergiert ist;
das Anodenmaterial mit Raman-Spektroskopie getestet wird, wobei das Anodenmaterial einen ersten charakteristischen Peak bei 520±10 cm⁻¹ aufweist, und die Peakintensität des ersten charakteristischen Peaks IA ist; ein zweiter charakteristischer Peak bei 960±10 cm⁻¹ vorliegt, die Peakintensität des zweiten charakteristischen Peaks IB ist; ein dritter charakteristischer Peak bei 480±10 cm⁻¹ vorliegt, die Peakintensität des dritten charakteristischen Peaks IC ist, und die folgenden Beziehungen zwischen IA, IB und IC bestehen: 0,3 ≤ IA/(IB+IC) ≤ 0,6; und das Anodenmaterial erfüllt: α ≤ 10 %;
wobei das α durch das folgende Testverfahren erhalten wird:
in einem Elektronenmikroskopbild, das durch REM-Abschnittsverarbeitung eines einzelnen Anodenmaterialpartikels gezeigt wird, wird ein quadratischer Bereich von 10 µm × 10 µm ausgewählt, eine Schnittfläche der Anodenmaterialpartikel in dem quadratischen Bereich wird als S erfasst, eine Summe der Schnittflächen aller Poren mit einem Porendurchmesser von größer als 50 nm in dem Bereich des Abschnitts der Anodenmaterialpartikel in dem quadratischen Bereich wird als S₁ erfasst, α' = S₁/S, und das α ist ein arithmetischer Mittelwert von Werten α' von mindestens
10 Anodenmaterialpartikeln.

2. Anodenmaterial nach Anspruch 1, wobei das Siliziummaterial Siliziumpartikel umfasst.

3. Anodenmaterial nach Anspruch 1, wobei das Anodenmaterial Poren aufweist, wobei ein Volumenanteil von Mesoporen in einem Gesamtporenvolumen des Anodenmaterials 25 %-95 % beträgt, wie durch einen Porengrößenanalysator physico iPore620 und ein BET-Verfahren und eine DFT-Simulationsanalyse einer Stickstoffadsorptionsisotherme gemessen; und/oder ein Gesamtporenvolumen des Anodenmaterials 0,001 cm³/g-0,1 cm³/g beträgt, wie durch einen Porengrößenanalysator physico iPore620 und ein BET-Verfahren und eine DFT-Simulationsanalyse der Stickstoffadsorptionsisotherme gemessen.

4. Anodenmaterial nach Anspruch 2, wobei ein Anodenmaterial mit entfernten Siliziumpartikeln Poren aufweist, und ein Gesamtporenvolumen des Anodenmaterials mit entfernten Siliziumpartikeln 0,4 cm³/g-1,5 cm³/g beträgt, wie durch einen Porengrößenanalysator physico iPore620 und ein BET-Verfahren und eine DFT-Simulationsanalyse der Stickstoffadsorptionsisotherme gemessen; und/oder die durchschnittliche Porengröße der Poren des Anodenmaterials mit entfernten Siliziumpartikeln 1,0 nm-5,2 nm beträgt, wie durch den vollautomatischen Analysator für spezifische Oberflächen und Porosität ASAP 2460 von Micromeritics aus den Vereinigten Staaten getestet, und ein in dem Test verwendetes Gas CO₂ oder N₂ war.

5. Anodenmaterial nach Anspruch 1, wobei mindestens ein Teil einer Oberfläche des Anodenmaterials eine Kohlenstoffschicht aufweist, die Oberfläche des Anodenmaterials mit Raman-Spektroskopie getestet wird, wenn das Anodenmaterial einen charakteristischen Peak D bei 1350+10 cm⁻¹ aufweist, die Peakintensität des charakteristischen Peaks D ID ist, aufweisend einen charakteristischen Peak G bei 1580±10 cm⁻¹, die Peakintensität des charakteristischen Peaks G IG ist, dann die folgende Beziehung zwischen IA, ID, IG vorliegt: (ID+IG)/IA ≥ 10.

6. Anodenmaterial nach einem der Ansprüche 1 bis 5, wobei sich mindestens ein Teil der Siliziumpartikel innerhalb der Partikel der Kohlenstoffmatrix befindet.

7. Anodenmaterial nach einem der Ansprüche 1 bis 5, wobei das Anodenmaterial mindestens eines der folgenden Merkmale umfasst:
(1) die Kohlenstoffmatrix umfasst mindestens eines von hartem Kohlenstoff und weichem Kohlenstoff;
(2) die Kohlenstoffmatrix umfasst porösen Kohlenstoff, der poröse Kohlenstoff umfasst mindestens eines von Aktivkohlenstoff, einer Aktivkohlenstofffaser, Kohlenstoffruß, kapazitivem Kohlenstoff, mesoporösem Kohlenstoff, einer Kohlenstoffnanoröhre und einem Kohlenstoffmolekularsieb;
(3) ein Massenanteil des Sauerstoffelements in dem Anodenmaterial beträgt ≤ 5 %;
(4) ein Massenanteil des Kohlenstoffelements in dem Anodenmaterial beträgt 30 Gew.-%-60 Gew.-%;
(5) ein Massenanteil des Siliziumelements in dem Anodenmaterial beträgt 30 Gew.-%-65 Gew.-%;
(6) mindestens eine Teiloberfläche des Anodenmaterials ist mit einer Kohlenstoffschicht bereitgestellt, und die Dicke der Kohlenstoffschicht beträgt 0,1 nm-3000 nm.

8. Anodenmaterial nach einem der Ansprüche 1 bis 5, wobei das Anodenmaterial mindestens eines der folgenden Merkmale umfasst:
(1) das Anodenmaterial umfasst ferner andere aktive Partikel, und die anderen aktiven Partikel umfassen mindestens eines von Li, Na, K, Sn, Ge, Fe, Mg, Ti, Zn, Al, P und Cu; und/oder die anderen aktiven Partikel umfassen mindestens eines von Sn-Partikeln, Ge-Partikeln, Al-Partikeln; und/oder die anderen aktiven Partikel umfassen mindestens eine von einer Silizium-Lithium-Legierung, einer Silizium-Magnesium-Legierung; und/oder die anderen aktiven Partikel umfassen elementare Partikel und Legierungen;
(2) die Siliziumpartikel umfassen mindestens eines von amorphem Silizium, kristallinem Silizium, Siliziumoxid, Siliziumlegierung und einem Gemisch aus kristallinem Silizium und amorphem Silizium;
(3) die Siliziumpartikel umfassen amorphes Silizium;
(4) die Siliziumpartikel weisen einen durchschnittlichen Partikeldurchmesser von 0,1 nm bis 100 nm auf, wie durch Messen der maximalen Querlänge von 20 Siliziumpartikeln unter Verwendung eines Hochleistungsmikroskops und Berechnen des arithmetischen Mittels davon bestimmt; vorzugsweise beträgt die durchschnittliche Partikelgröße der Siliziumteilchen 0,1 nm-50 nm, mehr bevorzugt beträgt die durchschnittliche Partikelgröße der Siliziumteilchen 0,1 nm-5 nm.

9. Anodenmaterial nach einem der Ansprüche 1 bis 5, wobei der spezifische Oberflächeninhalt des Anodenmaterials 1 m²/g-500 m²/g beträgt, wie durch das BET-Verfahren gemessen, wie durch das BET-Verfahren gemessen, die spezifische Oberfläche des Anodenmaterials mit entfernten Siliziumpartikeln 800 m²/g-2500 m²/g beträgt, wie durch das BET-Verfahren gemessen.

10. Anodenmaterial nach einem der Ansprüche 1 bis 5, wobei eine Verdichtungsdichte der aus dem Anodenmaterial hergestellten Anodenfolie 1,3 g/cm³-1,9 g/cm³ beträgt, wie gemäß Anhang L von GBT 24533-2019 getestet, und/oder ein kritischer Stehspannungsdruck P der aus dem Anodenmaterial hergestellten Anodenfolie größer als oder gleich 100 MPa ist, wobei der kritische Stehspannungsdruck P der Mindestdruck ist, bei dem die Anodenmaterialpartikel in der Anodenfolie zerdrückt werden, wie durch REM an einem Querschnitt der Anodenfolie beobachtet.

11. Batterie, wobei die Batterie das Anodenmaterial nach einem der Ansprüche 1 bis 10 umfasst.

12. Anodenmaterial nach Anspruch 8, wobei das Siliziumoxid ein Siliziumelement und ein Sauerstoffelement umfasst, ein Atomverhältnis des Siliziumelements zu dem Sauerstoffelement 0-2 : 1 beträgt und nicht 0 : 1 einschließt; vorzugsweise das Siliziumoxid die allgemeine chemische Formel SiOₓ aufweist, wobei 0<x<2.

13. Anodenmaterial nach Anspruch 7, wobei das Massenverhältnis von Siliziumelement zu Kohlenstoffelement in dem Anodenmaterial 0,8-2,0 : 1 beträgt.

14. Anodenmaterial nach einem der Ansprüche 1 bis 10, wobei das Anodenmaterial ebenso eine Beschichtungsschicht umfasst, die auf mindestens einem Teil der Oberfläche der Kohlenstoffmatrix verteilt ist.

15. Anodenmaterial nach Anspruch 14, wobei die Dicke der Kohlenstoffschicht 0,1 nm bis 3000 nm beträgt.

## Revendications

1. Matériau d'anode, comprenant une matrice de carbone et un matériau de silicium, dans lequel le matériau de silicium est dispersé dans la matrice de carbone ;
en testant le matériau d'anode avec une spectroscopie Raman, dans lequel le matériau d'anode a un premier pic caractéristique à 520±10 cm⁻¹, et l'intensité de pic du premier pic caractéristique est IA ; il y a un deuxième pic caractéristique à 960±10 cm⁻¹, l'intensité de pic dudit deuxième pic caractéristique étant IB ; il y a un troisième pic caractéristique à 480±10 cm⁻¹, l'intensité de pic dudit troisième pic caractéristique étant IC, et les relations suivantes existent entre IA, IB et IC : 0,3 ≤ IA/(IB+IC) ≤ 0,6 ; et le matériau d'anode respecte : α ≤ 10 % ;
dans lequel α est obtenu par le procédé de test suivant :
dans une image de microscope électronique montrée par traitement de coupe de MEB d'une unique particule de matériau d'anode, une région carrée de 10µm×10µm est sélectionnée, une aire en coupe des particules de matériau d'anode dans la région carrée est enregistrée en tant que S, une somme des aires en coupe de tous les pores avec un diamètre de pore supérieur à 50 nm dans la région de la coupe des particules de matériau d'anode dans la région carrée est enregistrée en tant que S₁, α' = S₁/S, et α est une valeur moyenne arithmétique des valeurs α' d'au moins 10 particules de matériau d'anode.

2. Matériau d'anode selon la revendication 1, dans lequel le matériau de silicium comprend des particules de silicium.

3. Matériau d'anode selon la revendication 1, dans lequel le matériau d'anode a des pores, dans lequel une proportion volumique de mésopores dans un volume total de pores du matériau d'anode va de 25 % à 95 %, telle que mesurée par un analyseur de taille de pores physico iPore620 et un procédé BET et une analyse par simulation DFT d'isotherme d'adsorption d'azote ; et/ou, un volume total de pores du matériau d'anode va de 0,001 cm³/g à 0,1 cm³/g, tel que mesuré par un analyseur de taille de pores physico iPore620 et un procédé BET et une analyse par simulation DFT d'isotherme d'adsorption d'azote.

4. Matériau d'anode selon la revendication 2, dans lequel un matériau d'anode avec particules de silicium retirées a des pores, et un volume total de pores du matériau d'anode avec particules de silicium retirées va de 0,4 cm³/g à 1,5 cm³/g, tel que mesuré par un analyseur de taille de pores physico iPore620 et un procédé BET et une analyse par simulation DFT d'isotherme d'adsorption d'azote ; et/ou, la taille moyenne de pore des pores du matériau d'anode avec particules de silicium retirées va de 1,0 nm à 5,2 nm, telle que testée par analyseur entièrement automatique de surface spécifique et de porosité Micromeritics ASAP 2460 des États-Unis, et un gaz utilisé dans le test était CO₂ ou N₂.

5. Matériau d'anode selon la revendication 1, dans lequel au moins une partie d'une surface du matériau d'anode a une couche de carbone, en testant la surface du matériau d'anode avec une spectroscopie Raman, dans laquelle le matériau d'anode a un pic caractéristique D à 1350±10 cm⁻¹, l'intensité de pic dudit pic caractéristique D est ID, ayant un pic caractéristique G à 1580±10 cm⁻¹, l'intensité de pic dudit pic caractéristique G étant IG, puis il y a la relation suivante entre IA, ID, IG : (ID+IG)/IA ≥ 10.

6. Matériau d'anode selon l'une quelconque des revendications 1 à 5, dans lequel au moins une partie des particules de silicium sont localisées à l'intérieur des particules de la matrice de carbone.

7. Matériau d'anode selon l'une quelconque des revendications 1 à 5, dans lequel le matériau d'anode comprend au moins l'une des caractéristiques suivantes :
(1) la matrice de carbone comprend au moins l'un parmi du carbone dur et du carbone mou ;
(2) la matrice de carbone comprend du carbone poreux, le carbone poreux comprend au moins l'un parmi du charbon actif, une fibre de charbon actif, du noir de carbone, du carbone capacitif, du carbone mésoporeux, un nanotube de carbone et un tamis moléculaire de carbone ;
(3) une proportion massique d'oxygène élémentaire dans le matériau d'anode est ≤ 5 % ;
(4) une proportion massique de carbone élémentaire dans le matériau d'anode va de 30 % en poids à 60 % en poids ;
(5) une proportion massique de silicium élémentaire dans le matériau d'anode va de 30 % en poids à 65 % en poids ;
(6) au moins une surface partielle du matériau d'anode est pourvue d'une couche de carbone, et l'épaisseur de la couche de carbone va de 0,1 nm à 3000 nm.

8. Matériau d'anode selon l'une quelconque des revendications 1 à 5, dans lequel le matériau d'anode comprend au moins l'une des caractéristiques suivantes :
(1) le matériau d'anode comprend en outre d'autres particules actives, et les autres particules actives comprennent au moins l'un parmi Li, Na, K, Sn, Ge, Fe, Mg, Ti, Zn, Al, P et Cu ; et/ou, les autres particules actives comprennent au moins l'une parmi des particules de Sn, des particules de Ge, des particules d'Al ; et/ou, les autres particules actives comprennent au moins l'un parmi un alliage silicium-lithium, un alliage silicium-magnésium ; et/ou, les autres particules actives comprennent des particules élémentaires et des alliages ;
(2) les particules de silicium comprennent au moins l'un parmi silicium amorphe, silicium cristallin, oxyde de silicium, alliage de silicium, et composite de silicium cristallin et de silicium amorphe ;
(3) les particules de silicium comprennent du silicium amorphe ;
(4) les particules de silicium ont un diamètre particulaire moyen de 0,1 nm à 100 nm, tel que déterminé en mesurant la longueur transversale maximale de 20 particules de silicium à l'aide d'un microscope à puissance élevée et en calculant la moyenne arithmétique de celles-ci ; de préférence, la taille moyenne de particules des particules de silicium va de 0,1 nm à 50 nm, plus préférablement, la taille moyenne de particules des particules de silicium va de 0,1 nm à 5 nm.

9. Matériau d'anode selon l'une quelconque des revendications 1 à 5, dans lequel la surface spécifique du matériau d'anode va de 1 m²/g à 500 m²/g, telle que mesurée par le procédé BET, telle que mesurée par le procédé BET, la surface spécifique du matériau d'anode avec particules de silicium retirées va de 800 m²/g à 2500 m²/g, telle que mesurée par le procédé BET.

10. Matériau d'anode selon l'une quelconque des revendications 1 à 5, dans lequel une masse volumique de compactage de la feuille d'anode fabriquée dans le matériau d'anode va de 1,3 g/cm³ à 1,9 g/cm³, telle que testée selon l'Appendice L de GBT 24533-2019, et/ou une pression critique de tension de tenue P de la feuille d'anode fabriquée dans le matériau d'anode est supérieure ou égale à 100 MPa, dans lequel la pression critique de tension de tenue P est la pression minimale à laquelle les particules de matériau d'anode dans la feuille d'anode sont écrasées, comme observé par MEB sur une coupe transversale de la feuille d'anode.

11. Batterie, dans laquelle la batterie comprend le matériau d'anode selon l'une quelconque des revendications 1 à 10.

12. Matériau d'anode selon la revendication 8, dans lequel l'oxyde de silicium comprend du silicium élémentaire et de l'oxygène élémentaire, un rapport atomique du silicium élémentaire à l'oxygène élémentaire va de 0 à 2:1, et ne comporte pas 0:1 ; de préférence, l'oxyde de silicium a la formule chimique générale SiOₓ, où 0<x<2.

13. Matériau d'anode selon la revendication 7, dans lequel le rapport massique du silicium élémentaire au carbone élémentaire dans le matériau d'anode va de 0,8 à 2,0:1.

14. Matériau d'anode selon l'une quelconque des revendications 1 à 10, dans lequel le matériau d'anode comprend également une couche de revêtement répartie sur au moins une partie de la surface de la matrice de carbone.

15. Matériau d'anode selon la revendication 14, dans lequel l'épaisseur de la couche de carbone va de 0,1 nm à 3000 nm.
